# EUROPÄISCHE PATENTSCHRIFT

(11) **EP 1 625 040 B1**
(45) Veröffentlichungstag und Bekanntmachung des Hinweises auf die Patenterteilung: **13.02.2008**
(21) Anmeldenummer: 04728335.3
(22) Anmeldetag: 20.04.2004
(51) Int. Cl.: B60K 28/06

(54) **VERFAHREN UND VORRICHTUNG ZUR BEEINFLUSSUNG DER BEANSPRUCHUNG EINES FAHRERS IN EINEM KRAFTFAHRZEUG**
METHOD AND DEVICE FOR INFLUENCING THE DEMANDS ON A DRIVER IN A MOTOR VEHICLE
PROCEDE ET DISPOSITIF POUR INFLUER SUR LA CONTRAINTE SUBIE PAR UN CONDUCTEUR DANS UN VEHICULE AUTOMOBILE

(30) Priorität: 16.05.2003 DE 10322458
(43) Veröffentlichungstag der Anmeldung: 15.02.2006
(73) Patentinhaber: Daimler AG, 70327 Stuttgart (DE)
(72) Erfinder: DOBLER, Günter, 73776 Altbach (DE); ELITOK, Ercan, 76137 Karlsruhe (DE); ENTENMANN, Volker, 71563 Affalterbach (DE); GOTTLIEB, Wolfgang, 10717 Berlin (DE); KUHN, Klaus-Peter, 73655 Plüderhausen (DE); LUDWIG, Michaela, 73760 Ostfildern (DE); PROETTEL, Andreas, 71409 Schwaikheim (DE); ROTHE, Siegfried, 73770 Denkendorf (DE); THEOFANOU, Dimitra, 73734 Esslingen (DE)
(86) Internationale Anmeldenummer: PCT/EP2004/004171
(87) Internationale Veröffentlichungsnummer: WO 2004/101306

(56) Entgegenhaltungen:
- DE-A- 10 136 123
- US-A- 6 061 610
- PATENT ABSTRACTS OF JAPAN Bd. 2002, Nr. 05, 3. Mai 2002 (2002-05-03) & JP 2002 010995 A (NISSAN MOTOR CO LTD), 15. Januar 2002 (2002-01-15) in der Anmeldung erwähnt

## Beschreibung

Die Erfindung betrifft ein Verfahren zur Beeinflussung der Beanspruchung eines Fahrers während der Fahrt in einem Kraftfahrzeug, bei dem aus sensorisch erfassten physiologischen Daten des Fahrers ein Beanspruchungswert ermittelt wird. Ferner betrifft die Erfindung auch eine Vorrichtung zur Durchführung dieses Verfahrens.

Aus der JP 2002 010 995 A, welche den nächstliegenden Stand der Technik darstellt, ist ein Verfahren zur Bestimmung des Beanspruchungswertes eines Fahrers während der Fahrt in einem Kraftfahrzeug beschrieben, wonach hierfür physiologische Daten des Fahrers, nämlich dessen Pulsfrequenz und Atemfrequenz verwendet werden. Die Auswertung der Daten führt zu einer Klassifizierung nach mentaler Beanspruchung, physischer Beanspruchung und gewöhnlicher Beanspruchung in Form eines jeweiligen Zahlenwertes. In Abhängigkeit der Größenverhältnisse dieser Werte wird der aktuellen Situation des Fahrers eine Kategorie mit einem bestimmten Beanspruchungswert zugeordnet und in Abhängigkeit dieses Wertes eine Fahrerunterstützungsaktion ausgewählt, indem beispielsweise automatisch ein Abstandskontrollsystem (ACC), ein automatisches Bremssystem oder ein Spurwechselassistent aktiviert wird, um den Fahrer von seinen Fahraufgaben zu entlasten. Dieses Verfahren sieht auch vor, bei bestimmten Beanspruchungswerten des Fahrers akustische oder visuelle Warnsignale zu erzeugen. Zur Durchführung dieses bekannten Verfahrens wird in dieser japanischen Druckschrift auch eine Vorrichtung beschrieben.

Weiterhin ist aus der DE 100 42 367 A1 ein Verfahren und eine Vorrichtung zur Diagnose der Fahrtüchtigkeit eines Fahrers in einem Kraftfahrzeug bekannt, bei dem ebenso physiologische Daten des Fahrers, die während der Fahrt erfasst werden, zur Bewertung des Fahrerzustandes herangezogen und mit Daten über den momentanen Fahrzustand des Fahrzeuges oder mit Daten über die momentane Verkehrssituation kombiniert und hieraus die Fahrtüchtigkeit des Fahrers abgeschätzt werden und ggf. auf dieser Abschätzung der Fahrtüchtigkeit beruhende Warnungen an den Fahrer abgegeben und notfalls auch Hilfsmaßnahmen eingeleitet werden. Dieses Verfahren schlägt auch vor, neben den aktuell gemessenen physiologischen Daten des Fahrers zusätzlich dessen außerhalb des Fahrzeugs gewonnenen gesundheitsrelevanten Daten, insbesondere dessen biographischen Daten zur Schätzung der momentanen Fahrerbelastung heranzuziehen. Im Falle einer festgestellten Überlastung oder nicht situationsadäquaten Beanspruchung des Fahrers wird bei diesem bekannten ein Verfahren vorgeschlagen, ein entsprechendes Notrufsignal, bspw. über GSM-Funk zu senden, um Hilfsmaßnahmen einleiten zu können.

Die Erfassung physiologischer Daten des Fahrers kann beispielsweise über entsprechende Sensoren am Lenkrad des Fahrzeuges erfasst werden, wie dies beispielsweise aus der DE 195 45 848 A1 bekannt ist. Daneben können auch physiologische Daten mittels Videoaufzeichnungen ermittelt werden, um beispielsweise über die Augenlidschlagfrequenz eine Aussage über den Fahrerzustand ableiten zu können, wie dies in der bereits genannten DE 100 42 367 A1 dargestellt ist. Schließlich können Sensorsysteme gemäß der o. g. JP 2002 010 995 A zur Messung der Pulsfrequenz im Sicherheitsgurt untergebracht werden.

Aus der DE 100 39 795 A1 ist ein Verfahren zur Warnung eines Fahrers eines Fahrzeuges bekannt, bei dem vor Ausgabe einer Warnung die Aufmerksamkeit des Fahrzeugführers ermittelt wird, wobei eine Warnung vor einer kritischen Situation nur in Abhängigkeit des ermittelten Aufmerksamkeitsgrades ausgegeben wird, d. h. beispielsweise, dass bei einer ermittelten hohen Aufmerksamkeit, diese Ausgabe sogar unterdrückt wird. Dabei wird die Aufmerksamkeit des Fahrers durch eine Detektion der Blickrichtung, der Lidschlagfrequenz und/oder der Kopfposition ermittelt. In die Ermittlung der Aufmerksamkeit gehen auch die vom Fahrer neben seiner Fahraufgabe gemachten Nebentätigkeiten, wie beispielsweise die Bedienung und Nutzung von Audio-Geräten, Navigationssystemen oder Mobilfunkeinrichtungen ein. Schließlich wird über die Messung von Körpertemperatur und/oder der Pulsfrequenz des Fahrers ein Müdigkeitszustand bestimmt und hieraus die Aufmerksamkeit des Fahrers ermittelt. Die Ausgabe von Warnungen erfolgt bei diesem bekannten Verfahren nicht nur lediglich in Abhängigkeit des ermittelten Aufmerksamkeitsgrades des Fahrers, sondern auch in Abhängigkeit des Fahrzeugzustandes, so dass mittels Assistenzsystemen, wie Einparkhilfen, Abstandskontrollsystemen (ACC) und Seitenstreifenerkennung kritische Fahrzeugzustandssituationen erkannt und in Abhängigkeit des detektierten Aufmerksamkeitsgrades des Fahrers Warnmeldungen früher oder später erzeugt werden. Auch bei diesem bekannten Verfahren werden physiologische Daten des Fahrers, wie Pulsfrequenz und Körpertemperatur mittels am Lenkrad angeordneten Sensoren erfasst.

Weiterhin ist aus der DE 199 52 857 C1 eine Vorrichtung zur fahrerzustandsabhängigen Steuerung von Fahrzeugkomponenten und optischen oder akustischen Signaleinrichtungen bekannt, wobei zur Zustandserkennung des Fahrers eine Auswertung des mit einer Kamera aufgenommenen Gesichtes des Fahrers als auch die mit einem Mikrofon aufgenommene Stimme des Fahrers ausgewertet werden. In Abhängigkeit des ermittelten Zustandes des Fahrers erfolgt eine Informationsfilterung für darzustellende Informationen und ggf. werden auch Notfallfunktionen oder Hilfefunktionen für den Fahrer aktiviert. So kann beispielsweise als Notfallfunktion ein Notruf über eine Kommunikationseinrichtung abgesetzt werden, wenn der Fahrer z. B. einen Zusammenbruch erlebt. Als Hilfefunktion ist es möglich, in einer Stresssituation des Fahrers beruhigende Musik zu erzeugen, indem entsprechende Tonträger auf eine mit dem Autoradio verbundenen Abspielgerät abgespielt werden oder indem ein Rundfunksender eingestellt wird, der entsprechende Musik sendet. Zudem kann in Abhängigkeit des Zustandes des Fahrers ein automatisches Bremssystem aktiviert werden, wobei zwischen Notfallsituationen und anderen Situationen unterscheidbar ist. Beispielsweise führt dessen Aktivierung in einem Notfall, beispielsweise im Falle eines Zusammenbruchs des Fahrers, eine langsame Bremsung durch, so dass bei gleichzeitiger Entkupplung eine weitere Beschleunigung des Fahrzeugs unterbunden wird.

Weiterhin ist aus der DE 197 53 160 C1 eine Vorrichtung zum Erkennen einer bevorstehenden Unfallsituation eines Fahrzeugs bekannt, bei der es darum geht, mittels eines Bilderkennungssystems Bewegungsänderungen der Hände zu detektieren und daraus die Geschwindigkeit, mit der die Bewegungsänderungen erfolgen, zu ermitteln. Falls diese Bewegungsänderungen auf eine panikartige Bewegung hindeuten, wird wenigstens ein Sicherheitssystem aktiviert. Hierbei wird erfahrungsgemäß davon ausgegangen, dass Fahrer, die eine unmittelbar bevorstehende Unfallsituation erkennen, panikartig am Lenkrad drehen, um der Unfallsituation auszuweichen. Zusätzlich zur Detektion der Bewegung der Hände können auch die Bewegung der das Gas-und Bremspedal betätigenden Füße des Fahrers detektiert werden und ebenfalls zur Auslösung eines Sicherheitssystems führen, wenn die Bewegungsgeschwindigkeit eines Fußes eine vorgegebene Schwelle überschreitet, die auf eine Panikreaktion des Fahrers hinweist.

Zur Bestimmung des Beanspruchungswertes eines Fahrers wird gemäß US 6,061,610 mittels eines Lenkwinkelsensors die Lenkwinkel während der Fahrt aufgezeichnet und dieses Lenkwinkelmuster mit einem Normmuster verglichen, das einem Lenkwinkelmuster eines belastungsfreien Fahrers entspricht. In Abhängigkeit des Vergleichsergebnisses wird ein Beanspruchungsindexwert erzeugt.

Weiterhin ist aus der DE 198 18 239 A1 eine Vorrichtung zur Einschlafwarnung eines Fahrers eines Kraftfahrzeuges bekannt, die eine Fahrzeugumgebungserkennungs-Einrichtung, eine Einrichtung zur Erfassung eines Referenzfahrstils des Fahrers, eine Vergleichslogik zum Auswerten des Referenzfahrstils mit einem von der Fahrzeugumgebungserkennungs-Einrichtung ermittelten Ist-Fahrstil und eine von der Vergleichslogik ansteuerbare Warneinrichtung umfasst. Wird aufgrund der Auswertung der Daten der Fahrzeugumgebungserkennungs-Einrichtung eine Lateralbewegung des Kraftfahrzeuges zur Fahrbahnbegrenzung erkannt, so wird diese laterale Bewegung mittels der Vergleichslogik mit dem Referenzfahrstil verglichen und bei Überschreitung eines Schwellwertes eine Warneinrichtung zur Erzeugung eines haptischen, akustischen oder optischen Warnsignals angesteuert.

Schließlich ist aus der DE 101 34 223 A1 eine Lufterfrischungseinheit für Kraftfahrzeuge bekannt, die eine olfaktorische Modifikation der Luft im Fahrzeuginnenraum erlaubt und entweder manuell bedienbar ist oder auch automatisch zur Warnung des Fahrers über seinen Geruchssinn bei fahrzeugkritischen Zuständen - wie bspw. bei hoher Kühlmittel-/Öltemperatur, Unterdruck in den Reifen oder ABS-Ausfall - eingesetzt werden kann. Im letztgenannten Fall wird vorgeschlagen, die Leistungsfähigkeit des Fahrers dann durch erhöhte Sauerstoffzufuhr zu steigern oder ihn durch eine entsprechende olfaktorische Modifikation positiv zu beeinflussen.

Diese bekannten Verfahren und Vorrichtungen dienen im Wesentlichen dazu, den Fahrer in Gefahrensituationen zu warnen oder durch entsprechende Steuerung von Fahrzeugsystemen in solchen Situationen zu entlasten. Dabei werden Gefahrensituationen als solche erkannt, wenn ein extremer Fahrerzustand, also entweder eine Einschlafgefahr oder eine Überlastung bzw. ein Zusammenbruch des Fahrers detektiert wird, wobei von einer Überlastung auch bei extremen Verkehrslagen bzw. Verkehrssituationen ausgegangen wird. Die entsprechenden Maßnahmen greifen also nur zur Abwendung einer bereits eingetretenen Gefahrensituation.

Der Erfindung liegt daher die Aufgabe zugrunde, ein Verfahren zur Beeinflussung der Beanspruchung eines Fahrers während der Fahrt in einem Kraftfahrzeug anzugeben, das bereits vor dem Auftreten von extremen Gefahrensituationen Maßnahmen vorsieht, so dass dadurch die Gefahr des Entstehens einer gefährlichen und unfallträchtigen Situation verhindert, zumindest jedoch reduziert wird.

Diese Aufgabe wird gemäß den Merkmalen der unabhängigen Patentansprüche 1, 2 und 3 gelöst.

Hiernach besteht die Lösung darin, dass durch automatisch erzeugte Maßnahmen mit Hilfe von im Fahrzeug vorhandenen Systemen der Fahrer ständig in einen optimalen Belastungs- bzw. Beanspruchungszustand gebracht werden soll, in dem er gleichzeitig zu einer maximalen Leistung fähig ist.

Die Erfindung geht davon aus, dass bei einer Abweichung von diesem optimalen Belastungs- bzw. Beanspruchungszustand auch die Leistungsfähigkeit des Fahrers abnimmt, d. h., wenn ausgehend von diesem optimalen Zustand die Belastung bzw. die Beanspruchung sowohl abnimmt als auch zunimmt. Ein extremer Belastungs- bzw. Beanspruchungszustand, bei dem beim Fahrer nahezu keine Leistungsfähigkeit mehr vorhanden ist, stellt sowohl der Schlafzustand bei Unterbelastung als auch ein Zusammenbruch des Fahrers bei absoluter Überbelastung dar.

Gemäß der Erfindung wird der Beanspruchungswert des Fahrers ermittelt und mit dem genannten optimalen Beanspruchungswert, dem sogenannten Beanspruchungszielwert, verglichen. Ist der ermittelte Beanspruchungswert kleiner als der vorgegebene Beanspruchungszielwert, liegt eine Unterbeanspruchung des Fahrers vor, die mit einem zu geringen Aufmerksamkeitsniveau anhergehen kann und zu einem Absinken des Leistungsniveaus führt. Erfindungsgemäß wird die Beanspruchung des Fahrers dadurch erhöht, dass durch Steuerung wenigstens eines Fahrzeugsystems visuelle und/oder auditive und/oder haptische und/oder olfaktorische Signale erzeugt und/oder bereits erzeugte visuelle und/oder auditive und/oder haptische und/oder olfaktorische Signale verstärkt und/oder deren Signalqualität verändert werden. Diese Signale dienen also dazu, die Beanspruchung des Fahrers derart zu erhöhen, dass er wieder zur optimalen Leistung fähig wird. Falls jedoch der ermittelte Beanspruchungswert größer als der Beanspruchungszielwert ist, liegt eine Überbeanspruchung des Fahrers vor, die ebenfalls zu einem Absinken des Leistungsniveaus führt. Erfindungsgemäß soll die Erhöhung der Beanspruchung des Verfahrens verhindert werden, indem Fahrerinformations- und/oder Anzeigesysteme des Kraftfahrzeuges derart angesteuert werden, dass die Ausgabe visueller und/oder auditiver und/oder haptischer und/oder olfaktorischer Signale teilweise oder vollständig unterdrückt oder zu einem späteren Zeitpunkt ausgegeben werden. Das teilweise Unterdrücken dieser Signale führt zu einer Reduzierung der Informationsmenge und kann genauso wie das Zurückhalten von Informationen in einer momentanen Überbeanspruchungssituation des Fahrers das weitere Ansteigen der Beanspruchung verhindern.

Gemäß Patentanspruch 2 sieht die Erfindung im Falle einer Überbeanspruchung des Fahrers vor, diese durch Steuerung wenigstens eines Fahrzeugsystems die Signalstärke und/oder Signalqualität von bereits erzeugten visuellen und/oder auditiven und/oder haptischen und/oder olfaktorische Signalen zu reduzieren bzw. zu verändern und/oder die Nutzung eines Fahrerassistenzsystems durch Ausgabe einer entsprechenden Information dem Fahrer anzubieten. Damit soll der Fahrer wieder in seinen Zustand optimaler Leistungsfähigkeit geführt werden, d. h. sich wieder hinsichtlich seiner Beanspruchung im Bereich des optimalen Beanspruchungszielwertes finden.

Erfindungsgemäß kann gemäß Patentanspruch 3 die Überbeanspruchung des Fahrers auch dadurch zurückgeführt werden, indem durch Steuerung wenigstens eines Fahrzeugsystems die Signalstärke und/oder Signalqualität eines bereits erzeugten visuellen und/oder auditiven und/oder haptischen und/oder olfaktorischen Signals reduziert bzw. verändert werden und/oder wenigstens ein Fahrerassistenzsystem aktiviert wird.

Mit der Erfindung kann die Sicherheit hinsichtlich des Verhaltens des Fahrers wesentlich verbessert werden, indem die mit technischen Mitteln erfasste und quantitativ bestimmte Beanspruchung, im Folgenden auch "Workload" genannt, als Regelgröße dient und in Abhängigkeit der Abweichung von einem optimalen Belastungswert des Fahrers, bei dem der Fahrer sich hinsichtlich seines Leistungsniveaus, insbesondere seines Aufmerksamkeitsniveaus in einem optimalen Zustand befindet, technische Systeme des Fahrzeugs als Regulationsmittel Signale derart erzeugen oder verändern, dass diese den Fahrer auf einem oder mehreren seiner Sinneskanäle, nämlich dem auditiven, visuellen oder haptischen erreichen und damit als Regulationsergebnis den Workload in Richtung des optimalen Wertes entweder erhöhen oder erniedrigen.

Vorzugsweise können die als Regulationsmittel dienenden Signale auch derart erzeugt oder verändert werden, dass aufeinanderfolgend unterschiedliche Sinneskanäle des Fahrers angesprochen werden - also ein Modalitätswechsel erfolgt -, so z. Bsp. dass zunächst ein visuelles und anschließend ein auditives oder umgekehrt, oder zuerst ein haptisches und dann ein olfaktorisches Signal erzeugt werden.

Bei einer vorteilhaften Weiterbildung der Erfindung wird der ermittelte Beanspruchungswert mit einem Beanspruchungszielbereich verglichen, der mit einem unteren und einem oberen Beanspruchungszielwert definiert ist, so dass bei diesen Werten gerade noch eine akzeptable Beanspruchung des Fahrers vorliegt und dabei von einem Leistungsniveau bzw. Aufmerksamkeitsniveau von ca. 80 % ausgegangen werden kann, wobei diese Werte (obere und untere Beanspruchungszielwert) variabel und individuell auf den Fahrer einstellbar sind. Somit greift erst bei einer Überschreitung des oberen Beanspruchungszielwertes bzw. Unterschreitung des unteren Beanspruchungszielwertes der Regulationsmechanismus.

Daneben werden auch Beanspruchungsgrenzwerte festgelegt, die eine minimale bzw. maximale Belastung bzw. Beanspruchung des Fahrers anzeigen. So besteht bei einer Unterschreitung des minimalen Beanspruchungsgrenzwertes die Gefahr des Einschlafens, so dass in diesem Fall Aufwecksignale erzeugt werden. Ferner ist es vorgesehen, einen daraus erfolgenden Gefahrenzustand des Fahrzeuges durch entsprechende Warnsignale auch den anderen Verkehrsteilnehmern anzuzeigen. Bei einer Überschreitung des oberen maximalen Beanspruchungswertes können ebenfalls andere Verkehrsteilnehmer gewarnt werden, da von einem überlasteten Fahrer ausgegangen wird, bei dem auch die Gefahr eines Zusammenbruchs besteht. Als Hilfsmaßnahme für den Fahrer kann ein automatisches Bremssystem des Fahrzeuges aktiviert werden, um beispielsweise eine weitere Beschleunigung des Fahrzeuges zu verhindern, oder aber um die Geschwindigkeit automatisch kontinuierlich zu reduzieren.

Vorzugsweise bestehen Maßnahmen zur Verhinderung einer weiteren Erhöhung der Beanspruchung des Fahrers darin, Warnmeldungen zu priorisieren und mittels Fahrerinformationssystemen Warnmeldungen mit niedrigerer Priorisierung zu unterdrücken oder zu einem späteren Zeitpunkt auszugeben. In ähnlicher Weise können auch Meldungen über den Eingang von Telefonanrufen, SMS-Nachrichten, E-Mails oder Verkehrsmeldungen behandelt werden.

Maßnahmen zur Steuerung der Beleuchtung von Anzeigen können zum gleichen Ergebnis führen, indem Anzeigen eines Anzeigesystems des Fahrzeuges priorisiert werden und die Beleuchtung einer Anzeige mit niedrigerer Priorität ausgeschaltet oder deren Leuchtstärke reduziert wird, um dadurch eine weitere Erhöhung der Beanspruchung des Fahrers zu verhindern.

Zur Erhöhung oder Erniedrigung der Workload des Fahrers kann mit Vorteil die Klimatisierung des Fahrzeuges eingesetzt werden. Dabei betrifft die Klimatisierung nicht nur die Klimaanlage, sondern auch die Sitzheizung, Sitzbelüftung, Standheizung als auch die Lenkradheizung. Eine vitalisierende Maßnahme, die zu einer Workload-Erhöhung führt, besteht beispielsweise in der Einstellung einer kühleren Temperatur, Verstärkung der Gebläsewirkung oder Änderung der Gebläserichtung oder das Einschalten der Lenkradheizung oder eine Erhöhung der Temperatur der Lenkradheizung. Maßnahmen zur Senkung der Workload des Fahrers können beispielsweise das Einschaltung der Klimaanlage sein, wenn eine hohe Innenraumtemperatur detektiert wird, gleichwirkend können eine niedrigere Temperatur der Sitzheizung, die Ausschaltung der Lenkradheizung oder auch eine angenehmere Einstellung der Gebläsewirkung sein.

Eine weitere vorteilhafte Weiterbildung hinsichtlich der Fahrzeugsysteme zur Erhöhung oder zur Reduzierung der Beanspruchung des Fahrers besteht darin, Steuergeräte für den Fahrersitz derart anzusteuern, dass durch Verstellung der Sitzlehne eine bequemere Sitzhaltung möglich ist, um die Workload zu reduzieren oder umgekehrt zur Workload-Erhöhung die Sitzhärte zu erhöhen. Die gleiche Wirkung kann auch mittels eines fahrdynamischen Sitzes erzielt werden, bei dem in Kurven durch Aufblasen oder Abblasen von Seitenteilen der Sitzlehne eine Änderung der Seitenführung des Fahrers bewirkt wird. Wirkungsvoll ist auch der Einsatz eines orthopädischen Sitzes, der in einer Massagestellung durch pulsierendes Auf-und Abblasen anregend und damit Workload erhöhend wirkt.

Vorzugsweise können auch Audiosysteme im Fahrzeug zur Erhöhung oder zur Reduzierung der Beanspruchung des Fahrers eingesetzt werden, indem beispielsweise die Lautstärke reduziert wird, die Qualität der Klänge angenehmer gestaltet oder auch Amplituden gedämpft werden, um damit die Beanspruchung des Fahrers zu reduzieren. Eine entsprechende Workload-Erhöhung kann mit entgegengesetzten Maßnahmen erzielt werden.

Auch eine entsprechende Steuerung der Beleuchtungseinrichtungen im Fahrzeug können zur Beeinflussung des Beanspruchungsniveaus des Fahrers eingesetzt werden, indem beispielsweise zur Erhöhung der Workload die Instrumentenbeleuchtung heller gesteuert wird oder zur Erzielung des umgekehrten Effektes, also zur Erzielung einer beruhigerenden Beleuchtung, deren Helligkeit reduziert wird.

Eine Workload-Reduzierungsmaßnahme kann auch darin bestehen, durch entsprechende Ansteuerung von Türsteuergeräten, Seitenscheiben oder das Schiebedach zu schließen, um damit ebenfalls die Workload des Fahrers zu senken, da bei geschlossenem Innenraum der Geräuschpegel geringer ist als bei offenen Seitenscheiben bzw. offenem Schiebedach.

Eine besonders vorteilhafte Weiterbildung hinsichtlich des zur Erhöhung oder zur Reduzierung der Beanspruchung des Fahrers verwendeten Fahrzeugsystems besteht darin, bei hoher Workload dem Fahrer mittels einem Navigationssystem eine leichtere Strecke anzubieten. Zur Erzielung der entgegengesetzten Wirkung kann eine schwierigere Strecke zur Erreichung des Fahrtzieles angeboten werden. Zusätzlich können auch Informationen, die das Navigationssystem bereithält, zur Erhöhung der Workload angezeigt werden, wie beispielsweise Parkplätze oder sich in der Nähe befindliche, besonders attraktive Hotelanlagen.

Besonders vorteilhaft ist es natürlich, die in dem Fahrzeug vorhandenen Informationssysteme zur Erhöhung oder zur Reduzierung der Beanspruchung des Fahrers einzusetzen. So können beispielsweise zur Erhöhung der Workload dem Fahrer die unterschiedlichsten Informationen allgemeiner Art oder aber auch über das Fahrzeug angeboten werden oder zur Erzielung der umgekehrten Wirkung, der Informationsstrom auf das Notwendigste beschränkt werden.

Mit Vorteil kann auch ein Steuergerät für die Abstandsregelung (ACC-System) zur Erhöhung oder zur Reduzierung der Beanspruchung des Fahrers verwendet werden. So führt beispielsweise die Vergrößerung des Sicherheitsabstandes oder die Reduzierung der gesetzten Geschwindigkeit zu einer Verminderung der Beanspruchung des Fahrers. Die entgegengesetzten Maßnahmen führen natürlich zu einer Erhöhung der Workload. Daneben führen Maßnahmen, wie die Ausgabe einer Warnung mit erhöhter Lautstärke oder aber die gänzliche Abschaltung dieses ACC-Steuergerätes ebenfalls zur Workload-Erhöhung.

Weiterhin kann mit einem Steuergerät für die Fahrwerksregelung eine weichere oder härtere Dämpfung eingestellt werden, um damit die Workload zu reduzieren oder zu erhöhen.

Auch Steuergeräte für die Verkehrszeichenerkennung eignen sich für diesen Zweck, indem beispielsweise zur Erhöhung der Workload die Verkehrzeichenerkennung auf die Erkennung aller Verkehrszeichen eingestellt ist, während zur Erzielung des umgekehrten Effektes nur relevante Verkehrszeichen dargestellt werden.

Eine besonders vorteilhafte Maßnahme zur Erhöhung der Workload besteht darin, Steuergeräte für die Einstellung der Lenkradposition und zur Erzeugung von Lenkradvibrationen zu verwenden. Auch ein Steuergerät für die Servolenkung kann für diesen Zweck eingesetzt werden, indem beispielsweise die Lenkung schwergängiger eingestellt wird.

Schließlich lässt sich mit im Fahrzeug vorhandenen Assistenzsystemen der Beanspruchungswert eines Fahrers besonders wirkungsvoll beeinflussen. So kann zur Erniedrigung der Beanspruchung des Fahrers die Nutzung derselben angeboten werden, oder bei besonders hohen Belastungswerten diese Systeme automatisch zugeschaltet werden. Eine Erhöhung der Belastung kann in einfacher Weise dadurch erreicht werden, dass solche Assistenzsysteme ausgeschaltet werden.

Als Assistenzsysteme können dabei Kurvenwarnsysteme, Spurwechselassistenten, Spurassistenten, die das Fahrzeug automatisch in der Spur halten, Stop-and-go-Assistenten, automatische Bremssysteme, die automatisch eine Beschleunigung verhindern oder einen Bremsvorgang einleiten, Bremsassistenten, die in Abhängigkeit der Bremspedalbetätigungsgeschwindigkeit eine Bremskraftbetätigung bewirken, oder auch Nachtsichtgeräte auf der Basis von Infraroterkennung angesehen werden.

Die Beanspruchung des Fahrers wird auf der Basis von physiologischen Daten, wie Pulsfrequenz, Blutdruck, Hautimpedanz, als auch Größen, wie die Blickbewegung, Lidschlusszeiten und Lidschlussgeschwindigkeit, bestimmt. Daneben können auch biographische Daten des Fahrers zur Bestimmung des Beanspruchungswertes verwendet werden, als auch Daten über die Disposition des Fahrers, wie beispielsweise der Fahrstil hinsichtlich Beschleunigen, Lenken oder Bremsen.

Neben der Disposition des Fahrers dürfte die Ursache der Belastung in der Fahrzeugführung liegen, wobei hierzu sowohl die Fahrzeugzustandsdaten als auch Umgebungsdaten hinsichtlich Streckenart, Straßenzustand, Verkehr und Umweltbedingungen gehören. Die Erfassung solcher Daten und deren Einbeziehung in die Bestimmung des Beanspruchungswertes des Fahrers führt zu einer wesentlichen Verbesserung des beanspruchten Verfahrens.

Zu einer verbesserten Bestimmung des Beanspruchungswertes des Fahrers dient auch die Erfassung dessen Fahrmanöver und/oder der Fahreraktionen. Als Fahrmanöver werden dabei starkes Beschleunigen oder Verzögern, schnelles Annähern an ein vorausfahrendes Fahrzeug, geringer Längsabstand oder starke Lenkbewegungen erfasst. Fahreraktionen stellen dagegen Bediensequenzen dar, die beispielsweise die Sitzverstellung, das Telefonieren oder Navigieren, die Bedienung des Radios oder der Klimaanlage betreffen.

Schließlich kann bei einer festgestellten Unterbeanspruchung des Fahrers und einer dadurch erfolgten Erhöhung der Beanspruchung der Fahrer hierüber, insbesondere bereits vor der Erhöhung seiner Beanspruchung informiert werden, z. Bsp. durch entsprechende Steuerung des Fahrerinformations- und Anzeigesystems zur Erzeugung visueller und/oder auditiver Signale.

Zur Durchführung des erfindungsgemäßen Verfahrens wird eine Vorrichtung gemäß Patentanspruch 37 angegeben, bei der zur Erfassung der physiologischen Daten des Fahrers eine Sensoreinheit vorgesehen ist, die über ein Bus-System mit einem Bordcomputer zur Ermittlung und Auswertung des Beanspruchungswertes des Kraftfahrers verbunden ist, wobei auf der Basis des von dem Bordcomputer erzeugten Auswerteergebnisses und den in einem Maßnahmenspeicher abgelegten Maßnahmen eine Workload-Steuereinheit wenigstens ein Fahrzeugsystem entsprechend der dem Auswerteergebnis zugeordneten Maßnahmen ansteuert. Vorzugsweise sind Fahrzeugzustands- und Fahrzeugumgebungssensoren vorgesehen, die mit dem Bordcomputer in Verbindung stehen. Ferner ist der Bordcomputer auch mit einem Eingabegerät zur Eingabe der biographischen Daten des Fahrers verbunden. Über ein solches Eingabegerät könnten auch Dispositionsdaten, wie beispielsweise Brückenangst, Tunnelangst und gewisse Vorlieben wie bspw. das bevorzugte Ausgabemedium eingegeben werden. Schließlich kann noch eine Fahreraktivitätssensorik mit dem Bordcomputer in Verbindung stehen, um bspw. dessen Fahrstil zu erfassen.

Die Erfindung soll nachfolgend genauer beschrieben und mittels Ausführungsbeispielen näher erläutert werden. Es zeigen:
- Fig. 1: ein Workload-Leistungs-Diagramm zur Beschreibung der Workload-abhängigen Leistung eines Fahrers,
- Fig. 2: ein Funktionsdiagramm zur Erläuterung der Wirkungsweise der Erfindung,
- Fig. 3a und b: ein Blockschaltbild zur Erläuterung der Funktionsweise eines Ausführungsbeispieles.

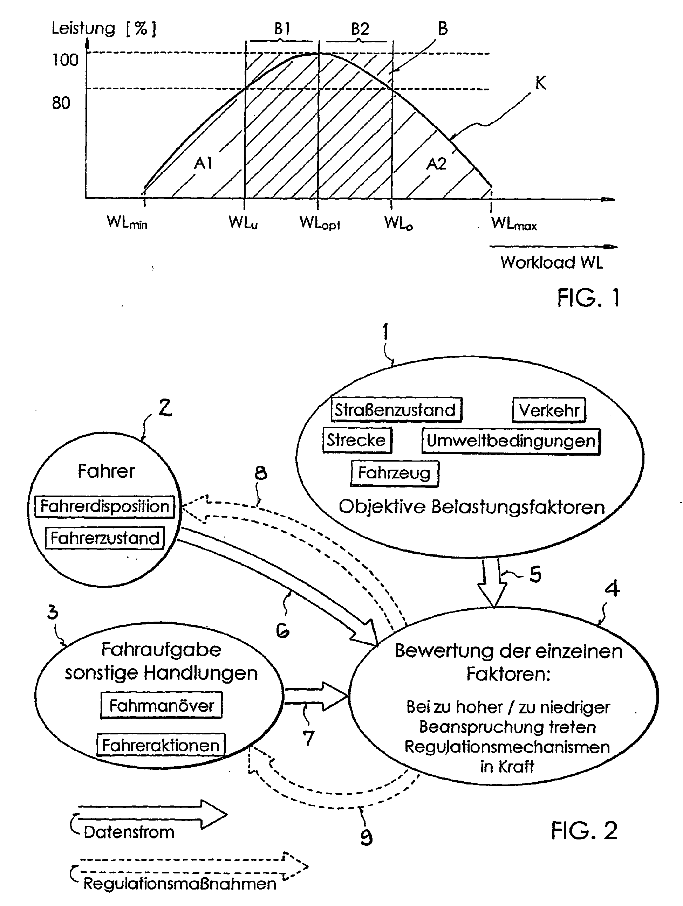

Figur 1 zeigt mit einer Belastungskurve K die Abhängigkeit der Leistung bzw. des Leistungsvermögens eines Fahrers in Abhängigkeit von dessen Beanspruchungswertes WL, hier Workload genannt. Diese Kurve K hat näherungsweise die Form einer Gaußschen Glockenkurve mit ihrem Maximum bei einem Workload-Wert WL von WLₒₚₜ. Es hat sich nämlich herausgestellt, dass es einen solchen optimalen Beanspruchungswert gibt, bei dem der Fahrer sein optimales Leistungsvermögen, d. h. auch ein optimales Aufmerksamkeitsniveau erreicht, das in dem Leistungs-Workload-Diagramm mit 100 % beziffert ist. Ausgehend von diesem optimalen Workload-Wert WLₒₚₜ führt sowohl eine Erhöhung der Beanspruchung bzw. der Belastung des Fahrers als auch eine Erniedrigung zu einem Leistungsabfall bzw. zu einem verminderten Aufmerksamkeitsniveau. Ferner wird mit einem unteren Beanspruchungswert WLᵤ und einem oberen Beanspruchungswert WLₒ ein Beanspruchungszielbereich B1 bzw. B2 definiert, der so definiert ist, dass die entsprechenden Beanspruchungswerte noch zu einem akzeptierbaren Leistungsniveau des Fahrers führen. In Figur 1 sind diese beiden Werte WLᵤ und WLₒ so definiert, dass wenigstens ein Leistungsniveau von 80 % erreicht werden kann.

Ferner sind ein unterer minimaler Beanspruchungsgrenzwert WLₘᵢₙ und ein oberer maximaler Beanspruchungsgrenzwert WLₘₐₓ jeweils am Ende der Kurve K definiert, der jeweils einen absoluten Belastungsgrenzwert des Fahrers anzeigt. Wird ein Workload-Wert unterhalb des unteren minimalen Beanspruchungsgrenzwertes WLₘᵢₙ ermittelt, so besteht die Gefahr, dass der Fahrer einschläft. Im anderen Fall, wenn also ein Workload-Wert oberhalb des oberen maximalen Beanspruchungsgrenzwertes WLₘₐₓ vorliegt, bedeutet dies eine völlige Überlastung des Fahrers bzw. die Gefahr des Zusammenbruchs des Fahrers.

Wird nun ein Beanspruchungswert WL ermittelt, der entweder in dem durch die Werte WLₘᵢₙ und WLᵤ definierten Bereich A1 bzw. in dem durch die Werte WLₒ und WLₘₐₓ definierten Bereich A2 liegt, werden automatisch Fahrzeugsysteme derart angesteuert, dass dadurch eine Erhöhung oder Erniedrigung der Beanspruchung bzw. des Workload der Fahrers eintritt, infolgedessen die Beanspruchung des Fahrers in den optimalen Workload-Bereich B1 oder B2 geführt wird.

Das Diagramm nach Figur 2 zeigt den Zusammenhang zwischen den die Belastung des Fahrers bestimmenden Faktoren, deren Erfassung als Datenmaterial zur Bestimmung des Beanspruchungswertes dient, und die Regulationsmaßnahmen zur Workload-Optimierung, also die Maßnahmen zur Beeinflussung der Beanspruchung des Fahrers, um dessen Leistung auf einem hohen Niveau zu halten. Zur Bestimmung des Beanspruchungswertes (Bezugszeichen 4) werden objektive Belastungsfaktoren (Bezugszeichen 1) erfasst, die den Straßenzustand, den Verkehr, die Streckenart, Umweltbedingungen und den Fahrzeugzustand betreffen. Diese Faktoren werden sensorisch erfasst und als Datenmaterial 5 einer Bewertung unterzogen. In entsprechender Weise werden fahrerbezogene Zustandsdaten 2 sensorisch erfasst und als Datenstrom 6 ebenfalls einer Bewertung unterzogen. Dabei handelt es sich um die Fahrerdisposition und den Fahrerzustand betreffenden Daten. Schließlich stellen die Fahraufgabe und sonstige Handlungen des Fahrers (Bezugszeichen 3) die letzte Belastungsquelle dar, wobei als auszuwertende Daten 7 Fahrmanöver des Fahrers und Fahreraktionen detektiert werden.

Alle Belastungsfaktoren werden nun auf der Basis der Daten 5, 6 und 7 einer Bewertung unterzogen und hieraus ein Beanspruchungswert ermittelt. Bei einem zu hohen als auch bei einem zu niedrigen Beanspruchungswert, d. h. ein solcher Wert liegt gemäß Figur 1 in einem der Bereiche A1 oder A2, werden Regulationsmaßnahmen 8 und 9 erzeugt, die den Fahrer 2 derart beeinflussen oder seine Fahraufgabe derart ändern, dass sich hieraus wieder ein Beanspruchungswert ergibt, der gemäß Figur 1 in den Bereichen B1 oder B2 liegt.

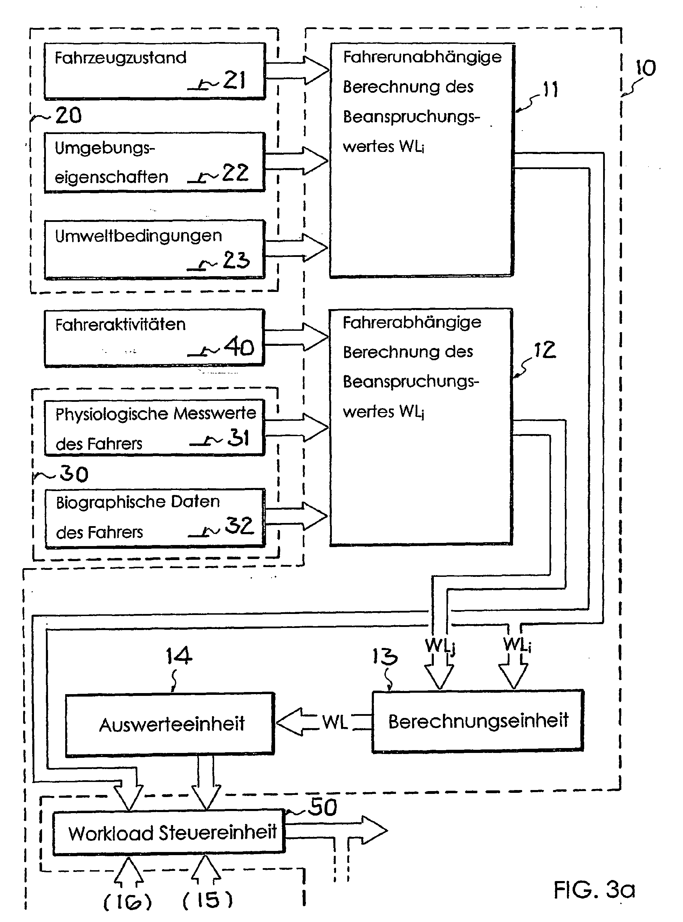

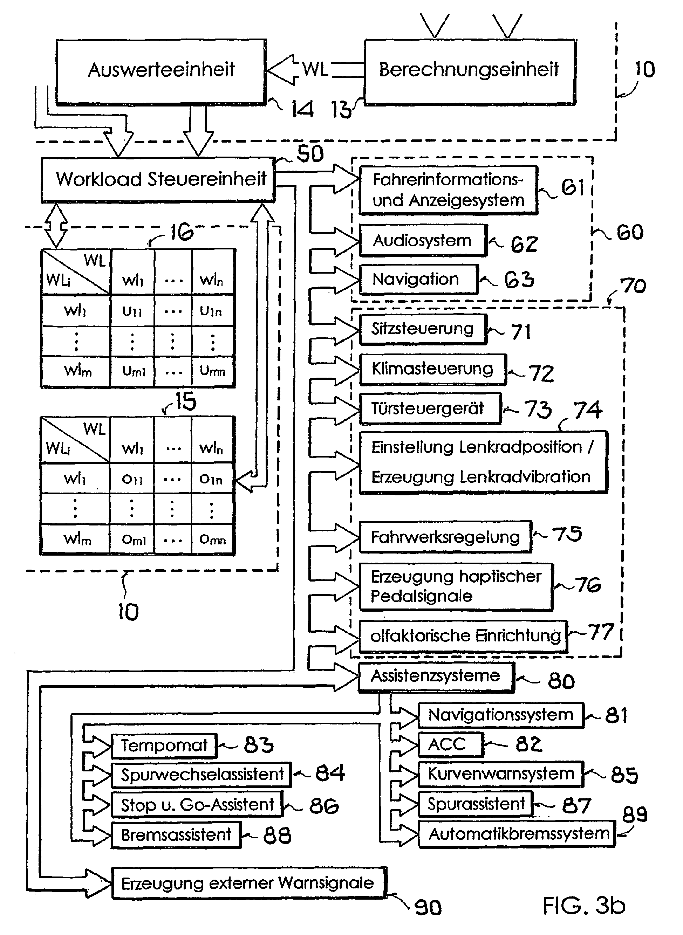

Das Blockdiagramm nach Figur 3a/3b zeigt die Funktionseinheiten in einem Fahrzeug, mit denen die relevanten Belastungsfaktoren des Fahrers ermittelt werden, aus dem entsprechenden Datenmaterial Beanspruchungswerte berechnet werden, um in Abhängigkeit eines Vergleichs mit einem vorgegebenen Beanspruchungszielwert WLₒₚₜ (vgl. Figur 1) entsprechende Regulationsmechanismen zur Beeinflussung der Beanspruchung des Fahrers auszulösen.

Gemäß dieser Figur 3a/3b werden mittels Sensoreinheiten 20, 30 und 40 Zustandsdaten ermittelt und einem Bordcomputer 10 zur Auswertung zugeführt. Diesem Bordcomputer 10 ist eine Workload-Steuereinheit 50 nachgeschaltet, die auf der Basis des Auswerteergebnisses unterschiedliche Fahrzeugsysteme 60, 70, 80 und 90 ansteuert.

Die Sensoreinheit 20 erfasst objektive Belastungsfaktoren und betreffen den Fahrzeugzustand 21, Umgebungseigenschaften 22 und Umweltbedingungen 23. Als Messgröße zur Erfassung des Fahrzeugzustandes können die Geschwindigkeit, Beschleunigung, fahrdynamische Größen, wie Gierrate, Wankwinkel, Nickwinkel, Lenkradwinkel, Lenkradmoment, Lenkradwinkelgeschwindigkeit, Lenkradwinkelbeschleunigung, ESP- und ABS-Betriebszustand, längsdynamische Größen, wie Pedalstellungen, Motormoment, Bremsmoment, Motordrehzahl, Gangwahl, Kupplung und Kickdown-Zustand ermittelt werden. Des Weiteren können auch Lärmpegel im Fahrzeug, die Fahrzeugmasse, der Beladungszustand, ob ein Anhänger mitgeführt wird, ob Wischwasser fehlt, ob ein defektes Licht vorliegt, der Reifenzustand, der Reifendruck, ob Winterreifen aufgezogen sind, oder ob eine Scheinwerferverschmutzung vorliegt, miterfasst werden. Zur Erfassung der genannten Messgrößen sind in der Regel entsprechende Sensoren im Fahrzeug bereits vorhanden.

Umgebungseigenschaften 22 betreffen die Art der Straße, also Bundesstraße, Landesstraße, eine Straße innerhalb eines Ortes, den Straßenverlauf, erfasst durch die Größen Kurvenverlauf, Steigung/Gefälle, Straßenoberfläche/Straßenzustand, Straßenbreite, Spurrillen, Verkehrsdichte. Auch lokale Ereignisse, wie beispielsweise Tunneleinfahrt/Tunnelausfahrt, Kreuzung, Kreisverkehr, Fußgängerüberweg, Ampel, Geschwindigkeitsbeschränkung, Verkehrszeichen, Brücken, Bahnübergänge, Fußgängerzone, Spielstraße, Baustellen, Engstellen, Parkmöglichkeiten können mittels entsprechender Sensorik erfasst werden.

Die Umweltbedingungen 23 betreffen im Wesentlichen die Beleuchtung bzw. Sicht, die Signalgebung und das Klima. Als relevante Messgrößen können hierfür der Betriebszustand der einzelnen Lichtquellen, insbesondere auch des Nebellichtes, erfasst werden, relevante Größen können mit einem Lichtsensor, einem Sonnenstandssensor, einem Regensensor ermittelt werden. Auch Größen, wie die Tageszeit, Jahreszeit, der geographische Ort sind wichtige Messgrößen. Hinsichtlich der Signalgebung werden die Betriebszustände von Blinker, Warnblinker und Hupe detektiert. Zur Bestimmung des Klima-Zustandes werden Außentemperatur, Innentemperatur, eingestellte Temperatur und Zustand der Sitzheizung erfasst.
Die von der Sensoreinheit 20 erfassten Daten werden einer Einheit 11 des Bordcomputers 10 zur Berechnung des fahrerunabhängigen Beanspruchungswertes WLᵢ zugeführt.

Die Sensoreinheit 40 zur Erfassung der Fahreraktivitäten umfasst Daten hinsichtlich der vom Fahrer ausgeführten Fahrmanöver als auch Fahreraktionen. Die Messgröße "Fahrmanöver" erfasst beispielsweise starkes Beschleunigen oder Verzögern, starke Lenkbewegungen, Spurwechsel oder Abbiegen, schließlich auch den Fahrstil des Fahrers. Fahreraktionen betreffen dagegen im Wesentlichen die Nebenaufgabe des Fahrers, also insbesondere die Bedienung der Fahrzeugsysteme. Hierzu werden beispielsweise Bediensequenzen hinsichtlich Sitzverstellung, Telefonbedienung, Bedienung des Navigationssystems, Spiegelverstellung, Bedienung von Audio/Multimedia-Geräten oder Bedienung der Klimaanlage erfasst. Zu der Messgröße "Fahreraktivitäten" gehört auch die Erfassung des Betriebszustandes von Fahrerassistenzsystemen. Dabei kann beispielsweise bei einem aktiven Abstandsregelsystem (ACC-System) eine schnelle Annäherung an ein vorausgehendes Fahrzeug oder ein geringer Längsabstand zum vorderen Fahrzeug erfasst werden.

Mit der Sensoreinheit 30 werden subjektive Belastungsfaktoren des Fahrers erfasst, so die physiologischen Daten des Fahrers wie Blutdruck, Herzrate, Lidschlusszeiten, Lidschlussgeschwindigkeit und Blickbewegung. Über ein entsprechendes Eingabegerät 32 lassen sich auch biographische Daten ermitteln bzw. eingeben, wie Alter, Geschlecht, als auch Fahrerdispositionseigenschaften, wie Brückenangst, Tunnelangst und gewisse Vorlieben wie bspw. das bevorzugte Ausgabemedium, Fahrernervosität oder auch Handicaps, wie beispielsweise, ob der Fahrer Brillenträger ist.

Die mit den Sensoreinheiten 30 und 40 erfassten Daten werden einer weiteren Einheit 12 des Bordcomputers 10 zur Berechnung eines fahrerabhängigen Beanspruchungswertes WLⱼ zugeführt.

Die von den Einheiten 11 und 12 bestimmten Beanspruchungswerte WLᵢ und WLⱼ werden einer Berechnungseinheit 13 zugeführt, die hieraus einen Gesamtbeanspruchungswert WL bestimmt. Eine der Berechnungseinheit 13 nachgeschaltete Auswerteeinheit 14 wertet diesen Beanspruchungswert WL aus, indem dieser Wert mit den im Zusammenhang mit Figur 1 beschriebenen Werten, das sind der untere Beanspruchungszielwert WLᵤ, der obere Beanspruchungszielwert WLₒ, der untere minimale Beanspruchungsgrenzwert WLₘᵢₙ und der obere maximale Beanspruchungsgrenzwert WLₘₐₓ verglichen wird. Dieses Auswerteergebnis wird zusammen mit dem fahrerunabhängigen Beanspruchungswert WLᵢ der Workload-Steuereinheit 50 zugeführt. Mittels zweier, in einem Speicher des Bordcomputers 10 abgelegten Tabellen 15 und 16 bestimmt die Workload-Steuereinheit 50, welche der Fahrzeugsysteme 60, 70, 80 oder 90 und in welcher Weise diese angesteuert werden.

Die Tabelle 15 ordnet jedem Wertepaar aus Beanspruchungswert WL und fahrerunabhängigen Beanspruchungswert WLᵢ eine entsprechende Maßnahme oₗₖ (l = 1, ... , m, k = 1, ..., n) zu. Die entsprechenden Workload-Werte sind für den Beanspruchungswert WL mit Wl₁ bis wlₙ bezeichnet, wobei ein niedriger Index eine geringere Beanspruchung anzeigt als ein Wert mit einem höheren Index. Die Werte für den fahrerunabhängigen Beanspruchungswert WLᵢ sind mit wl₁ bis wlₘ bezeichnet, wobei auch hierbei gilt, dass Werte mit kleinem Index eine geringere Beanspruchung anzeigen als Werte mit einem höheren Index. Die Beanspruchungswerte WL in dieser Tabelle 15 sind jedoch Werte, die unterhalb des unteren Beanspruchungszielwertes WLᵤ (vgl. Figur 1) liegen. Die zugehörigen Maßnahmen Oₗₖ stellen daher Maßnahmen zur Erhöhung der Workload des Fahrers dar.

Die Tabelle 16 unterscheidet sich von Tabelle 15 lediglich dadurch, dass die Werte wl₁ bis wlₙ des Beanspruchungswertes WL oberhalb des oberen Beanspruchungszielwertes WLₒ (vgl. Figur 1) liegen und die entsprechenden Maßnahmen uₗₖ (1 = 1, ..., m, k = 1, ..., n) sind daher solche Maßnahmen zur Reduzierung der Workload des Fahrers.

Im Folgenden soll anhand einiger konkreter Beispiele die Funktion der Workload-Steuereinheit 50 im Zusammenspiel mit den Tabellen 15 und 16 und der Ansteuerung der Fahrzeugsysteme 60, 70, 80 und 90 dargestellt und erläutert werden.

Wird beispielsweise detektiert, dass ein schwieriger Streckenabschnitt in den nächsten Sekunden durch den Fahrer zu bewältigen ist, diese Situation mit einem mittleren fahrerunabhängigen Workload-Wert wl₁ bewertet wird und bereits ein schwieriges Fahrmanöver vom Fahrer bewältigt wurde, das ebenfalls zu einem mittleren Beanspruchungswert WL führt, kann beispielsweise die zugehörige Maßnahme uₗₖ darin bestehen, eine weitere Erhöhung der Workload des Fahrers zu verhindern. Dafür können folgende Maßnahmen uₗₖ vorgesehen werden:
■ Teilweises oder vollständiges Unterdrücken bzw. zeitliches Verschieben der Ausgabe von Warnmeldungen mit niedrigerer Priorität, realisiert durch entsprechende Ansteuerung eines Fahrerinformations- und Anzeigesystems 61 durch die Workload-Steuereinheit 50,
■ Reduzierung der Leuchtstärke von Anzeigeinstrumenten mit niedrigerer Priorität bzw. Ausschalten dieser Beleuchtung, realisiert durch das bereits genannte Fahrerinformations-und Anzeigesystem 61,
■ keine Annahme bzw. Anzeige von eingehenden Telefonanrufen, SMS-Mitteilungen oder eingehenden E-Mails, sondern ggf. eine Weiterleitung an die Mailbox, realisiert ebenfalls durch das Fahrerinformations- und Anzeigesystem 61, und
■ Teilweises oder vollständiges Unterdrücken bzw. zeitliches Verschieben der Anzeige von Verkehrsmeldungen, die über das Radio eines Audiosystems 62 oder über ein Navigationssystem 81 empfangen wird.

Führen schwierige Verkehrs- und Straßenverhältnisse zu einem mittleren bis hohen fahrerunabhängigen Beanspruchungswert wl_{K} und liegt gleichzeitig auch ein hoher fahrerabhängiger Beanspruchungswert wlₖ vor, so werden von der Workload-Steuereinheit 50 Maßnahmen oₗₖ aus der Tabelle 15 durch Steuerung entsprechender Fahrzeugsysteme 60, 70, 80 oder 90 zur Workload-Reduzierung eingesetzt.

Hierzu dienen folgende Maßnahmen oₗₖ:
■ Mittels einer Klimasteuerung 72 eine entspanntere Klimatisierung einstellen: Steuerung der Klimaanlage des Fahrzeugs zur Absenkung der Temperatur des Innenraumes oder zur Abschwächung der Gebläsewirkung bzw. zur Änderung der Gebläserichtung, dass damit das Gesicht des Fahrers nicht mehr getroffen wird, Regelung der Sitzheizung auf niedrige Temperaturen bzw. Ausschalten der Sitzheizung, Aktivieren oder Verstärken der Sitzbelüftung, Regelung der Standheizung auf niedrige Werte bzw. Ausschaltung der Standheizung, oder Regelung einer Lenkradheizung auf niedrige Werte bzw. deren Ausschalten,
■ mittels einer Sitzsteuerung 71 die Stellung der Sitzlehne derart verändern, dass der Fahrer eine bequemere Sitzhaltung einnehmen kann oder die Sitzpolsterung weicher steuern bzw. im Falle eines fahrdynamischen Sitzes so steuern, dass ein besserer Seitenhalt möglich ist,
■ mittels einer Fahrwerksregelung 75 eine weichere Federung des Fahrgestells einstellen,
■ die Einstellung eines Audiosystems 62 erfolgt derart, dass die Lautstärke reduziert wird, das Klangbild weicher bzw. beruhigender wird oder die Amplituden abgeschwächt werden,
■ mittels des Fahrerinformations- und Anzeigesystems 61 eine beruhigendere Beleuchtung einstellen, so dass beispielsweise die Helligkeit in Abhängigkeit von Umgebungsbedingungen geregelt wird,
■ mittels eines Navigationssystems 63 dem Fahrer eine leichtere Strecke, beispielsweise eine sogenannte Seniorenroute, bei der nur rechts abzubiegen ist, anbieten,
■ werden hohe Außengeräusche aufgrund offener Seitenscheiben detektiert, werden diese automatisch mittels Ansteuerung des Türsteuergerätes 73 geschlossen; auch kann in diesem Fall eine Schließung des Schiebedaches vorgesehen werden,
■ die Ausgabe des Kraftstoffverbrauchs eines in dem Fahrerinformations- und Anzeigesystem 61 integrierten Reiserechners kann unterdrückt werden,
■ falls ein Abstandsregelsystem 82 (ACC-System) vorgesehen ist, führen die Vergrößerung des Sicherheitsabstandes zum vorausgehenden Fahrzeug, ein sanftes Andocken an das vorausfahrende Fahrzeug und die Reduzierung der gesetzten Geschwindigkeit zu einer Verminderung der Workload des Fahrers; auch kann eine akustische Warnung mit geringerer Lautstärke ausgegeben werden, als auch solche Warnungen bereits in einem früheren Stadium erzeugt werden. Falls ein solches ACC-System 82 nicht aktiv ist, kann die Aktivierung eines solchen Systems dem Benutzer vorgeschlagen werden, oder aber automatisch bei hohen detektierten Workload-Werten aktiviert werden. Die aufgeführten Maßnahmen können auch durch entsprechende Steuerung eines Tempomates 83 realisiert werden,
■ auch können Assistenzsysteme 80 automatisch eingeschaltet werden, um die Workload des Fahrers zu reduzieren. Hierbei kann es sich um das bereits genannte Navigationssystem 63 bzw. 81, das ACC-System 82 und das Tempomat-System 83 handeln. Daneben kann auch ein Spurwechselassistent 84, ein Kurvenwarnsystem 85, ein Stop-and-go-Assistent 86, ein Spurassistent 87, der das Fahrzeug automatisch in seiner Spur hält, ein Bremsassistent 88, der in Abhängigkeit der Bremspedalbetätigungsgeschwindigkeit die Bremskraft erhöht, oder ein Automatikbremssystem 89, das automatisch eine Beschleunigung des Fahrzeugs verhindert oder automatisch die Geschwindigkeit reduziert bzw. einen Bremsvorgang einleitet, vorgesehen werden, und
■ schließlich kann eine olfaktorische Einrichtung 77 mit einer von einer Steuereinheit gesteuerten Dosier- und Verteileinrichtung dazu dienen, solche olfaktorisch wirksame Substanzen, wie bspw. Lavendel, Kampfer oder Limone in den Fahrzeuginnenraum einzubringen, um dadurch die Workload des Fahrers zu reduzieren.

Auch bestimmte Umweltbedingungen, beispielsweise Nachtfahrt, Regen oder entgegenkommende Fahrzeuge können zu einem mittleren fahrerunabhängigen Beanspruchungswert WLᵢ führen, so dass eine entsprechende Maßnahme oₗₖ von der Workload-Steuereinheit 50 initiiert wird, wie beispielsweise, dass die Ausgabe jeglicher visueller Information vermieden wird, um dadurch keine zusätzliche visuelle Ablenkung zu erzeugen. Des Weiteren kann auch das Befahren eines Tunnels bei entsprechend disponierten Fahrern zu einem hohen fahrerabhängigen Beanspruchungswert WL führen, wenn diese Information dem System bekannt ist. Als Workload-reduzierende Maßnahme kann die Zurücknahme der Lautstärke von Audiosystemen vorgenommen werden oder die Klangfarbe so verändert werden, dass damit eine beruhigerende Stimmung erzeugt wird. Schließlich kann generell bei Einfahrt in einen Tunnel vorgesehen werden, dass eine Umluftschaltung aktiviert wird, Seitenfenster und ggf. das Schiebedach geschlossen wird.

Auch können bestimmte Fahrerdispositionen, die mit der Eingabeeinheit 32 eingegeben werden, zu individuellen Workload-Werten führen. Ist beispielsweise der Zustand "generell ängstlich" eingegeben, werden Warnsignale mit weniger erschreckenden, dezenteren Tönen ausgegeben, Warnmeldungen mit niedriger Priorität als Info angekündigt, die vom Benutzer zu gegebener Zeit selbst abgerufen werden können.

Fahreraktionen oder Fahrmanöver, wie beispielsweise hohe Geschwindigkeiten, großer Lenkwinkel oder starke Beschleunigungen oder extreme Bremsvorgänge können ebenfalls zu hohen Beanspruchungswerten unabhängig vom Fahrerzustand führen, die ebenfalls zu entsprechenden Maßnahmen oₗₖ zur Reduzierung der Workload führen, wie beispielsweise Unterdrücken von Warnmeldungen von niedriger Priorität, keine Durchstellung von Telefonanrufen oder Unterdrücken der Anzeige sonstiger Zusatzinformationen.

Im Folgenden sollen nun Beispiele dargestellt werden, bei denen ein Workload-Wert vorliegt, der unterhalb des unteren Beanspruchungszielwertes WLᵤ (vgl. Figur 1) liegt.

Ist beispielsweise von dem Fahrer ein schwieriger Streckenabschnitt zu bewältigen, wobei bisher keine schwierigen Fahrmanöver zu bewältigen waren, also die Fahraufgabe bisher sehr monoton war, kann von einem niedrigen fahrerunabhängigen Beanspruchungswert WLᵢ ausgegangen werden, so dass bei entsprechenden physiologischen Messwerten insgesamt ein niedriger Beanspruchungswert WL vorliegt. Als Maßnahme uₗₖ kann eine Voraktivierung des Fahrers durch entsprechende Ansteuerung des Fahrerinformations- und Anzeigesystems 61 durch die workload-Steuereinheit 50 erfolgen, indem Informationsmeldungen oder ein Warnton ausgegeben wird. Dies könnte auch durch entsprechende Ansteuerung des Navigationssystems 63 bzw. 81 realisiert werden.

Als schwieriger Streckenabschnitt können Kurven mit bestimmtem Kurvenradius und bestimmter Geschwindigkeit angesehen werden, ferner Ein- und Ausfahrten von Autobahnen bzw. Bundesstraßen und schließlich auch Ortseinfahrten oder Kreisverkehrsinseln.

Liegt ein besonders niedriger Beanspruchungswert WL vor, der im Bereich des unteren minimalen Beanspruchungsgrenzwertes WLₘᵢₙ (vgl. Figur 1) liegt, der also die Gefahr des Einschlafens des Fahrers anzeigt, kann mittels entsprechender Steuerung des Fahrerinformations- und Anzeigesystems 61 als auch des Audiosystems 62 und ggf. des Navigationssystems 63 bzw. 81 durch Ausgabe visueller und auditiver Signale und Informationen der Fahrer aktiviert werden, so dass dessen Beanspruchungswert wieder in den Bereich B1 (vgl. Figur 1) geführt wird. Entsprechendes gilt auch, wenn als Umgebungseigenschaft "Autobahn", als Fahrmanöver "mittlere bis niedrige Geschwindigkeit" detektiert wird und die physiologischen Messwerte Müdigkeit bzw. Monotonie anzeigen.

Zur Workload-Erhöhung des Fahrers werden folgende Maßnahmen uₗₖ durch Ansteuerung der Fahrzeugsysteme 60, 70, 80 und 90 mittels der Workload-Steuereinheit 50 realisiert:
■ Mittels der Klimasteuerung 72 kann die Innentemperatur abgesenkt werden, die Gebläsewirkung verstärkt werden, evtl. die Gebläsewirkung auf den Oberkörper oder Kopf des Fahrers gelenkt werden, oder eine Lenkradheizung eingeschaltet bzw. auf höhere Temperatur eingestellt werden,
■ mittels der olfaktorischen Einrichtung 77 lassen sich olfaktorisch wirksame anregende Substanzen in den Fahrzeuginnenraum ausbringen, wie bspw. natürliche Substanzen, wie Eukalyptus, Pfefferminze oder Zitrone oder auch synthetische Substanzen mit anregender Wirkung. Auch eine erhöhte Sauerstoffeinbringung führt zu einer Workload-Erhöhung und daher zu einer Steigerung der Leistungsfähigkeit des Fahrers.
■ Steuerung des Audiosystems 62 auf größere Lautstärke, härteres Klangbild oder ein anderes klangliches Raumgefühl, beispielsweise von einer kleinen Raumgröße auf eine große Raumgröße,
■ die Beleuchtungsstärke von Anzeigen mittels des Fahrerinformations- und Anzeigesystems 61 heller steuern,
■ mittels der Sitzsteuerung 71 die Neigung der Lehne verstellen, den Seitenhalt bei fahrdynamischen Sitzen vermindern oder insgesamt die Polsterung des Sitzes, z. Bsp bei orthopädischen Sitzen härter einstellen,
■ mittels des Türsteuergerätes 73 Seitenscheiben öffnen, ggf. auch Öffnen eines Schiebedaches,
■ Erzeugung von Lenkrad-Vibrationen oder Veränderung der Höheneinstellung des Lenkrades mittels eines Steuergerätes 74,
■ mittels des gleichen Steuergerätes 74 kann auch eine schwergängigere Lenkung eingestellt werden oder bei einer drohenden Spurabweichung ein entsprechendes Lenkradkorrekturmoment erzeugt werden,
■ härtere Einstellung der Fahrwerksdämpfung mittels der Fahrwerksregelung 75,
■ Erzeugung eines haptischen Pedalsignals für das Gaspedal mittels eines Steuergerätes 76, indem die Rückstellkraft des Gaspedals zum Anzeigen von angebrachter Geschwindigkeitsreduktion erhöht wird,
■ Ausgabe von Informationen jeglicher Art mittels des Fahrerinformations- und Anzeigesystems 61, des Audiosystems 62 und des Navigationssystems 63 bzw. 81. So kann beispielsweise das Radio oder ein CD-Player eingeschaltet werden, Informationen über Sehenswürdigkeiten in nächster Umgebung, Verkehrsmeldungen oder das Fahrzeug betreffende Informationen ausgegeben werden,
■ mittels des Navigationssystems 63 bzw. 81 kann eine schwierige Strecke zur Erreichung des Fahrtzieles angeboten werden oder auch Parkplätze oder günstige Hotelanlagen in unmittelbarer Nähe angezeigt werden,
■ bei aktiviertem Abstandsregelsystem (ACC-System) kann die gesetzte Geschwindigkeit erhöht, akustische Warnungen lauter oder aber Warnungen früher ausgegeben werden oder auch die Abstandsregelfunktion oder die Tempomat-Funktion automatisch deaktiviert werden,
■ auch können aktivierte, weitere Assistenzsysteme ausgeschaltet werden, wie beispielsweise der Spurwechselassistent 84, das Kurvenwarnsystem 85, der Stop-and-Go-Assistent 86, der Spurassistent 87, der Bremsassistent 88, oder das Automatikbremssystem 89,
■ falls das Fahrzeug eine Verkehrszeichenerkennung aufweist, kann die angebotene Informationsmenge durch Erfassen aller Verkehrszeichen und deren Anzeige erhöht werden.

Liegen extreme Beanspruchungswerte vor, die also unterhalb des unteren minimalen Beanspruchungsgrenzwertes WLₘᵢₙ oder oberhalb des oberen maximalen Beanspruchungsgrenzwerte WLₘₐₓ (vgl. Figur 1) liegen, die entweder eine hohe Belastung mit der Gefahr eines Zusammenbruchs des Fahrers oder eine Müdigkeit des Fahrers anzeigen, können andere Verkehrsteilnehmer mittels einer Steuereinheit 90 zur Erzeugung externer Warnsignale aktiviert werden, beispielsweise die Warnblinkanlage, Hupe, Lichthupe, Bremslicht oder das Abblendlicht eingeschaltet werden.

## Patentansprüche

1. Verfahren zur Beeinflussung der Beanspruchung eines Fahrers während der Fahrt in einem Kraftfahrzeug, bei dem aus sensorisch erfassten physiologischen Daten des Fahrers ein Beanspruchungswert (Workload, WL) ermittelt wird, und
a) der ermittelte Beanspruchungswert (WL) mit einem vorgegebenen Beanspruchungszielwert (WLₒₚₜ) verglichen wird, und
b) falls der ermittelte Beanspruchungswert (WL) mit WL > WLₒₚₜ eine Überbeanspruchung des Fahrers anzeigt, eine Erhöhung der Beanspruchung des Fahrers verhindert wird, indem Fahrerinformations- und/oder Anzeigesysteme des Kraftfahrzeuges derart angesteuert werden, dass die Ausgabe visueller und/oder auditiver und/oder haptischer und/oder olfaktorischer Signale vollständig oder teilweise unterdrückt oder zu einem späteren Zeitpunkt ausgegeben werden, **dadurch gekennzeichnet daß**
c) falls der ermittelte Beanspruchungswert (WL) mit WL < WLₒₚₜ eine Unterbeanspruchung des Fahrers anzeigt, die Beanspruchung des Fahrers erhöht wird, indem durch Steuerung wenigstens eines Fahrzeugsystems visuelle und/oder auditive und/oder haptische und/oder olfaktorische Signale erzeugt und/oder bereits erzeugte visuelle und/oder auditive und/oder haptische und/oder olfaktorische Signale verstärkt und/oder deren Signalqualität verändert werden.

2. Verfahren zur Beeinflussung der Beanspruchung eines Fahrers während der Fahrt in einem Kraftfahrzeug, bei dem aus sensorisch erfassten physiologischen Daten des Fahrers ein Beanspruchungswert (Workload, WL) ermittelt wird, und
a) der ermittelte Beanspruchungswert (WL) mit einem vorgegebenen Beanspruchungszielwert (WLₒₚₜ) verglichen wird, und
b) falls der ermittelte Beanspruchungswert (W_{L}) mit WL > WLₒₚₜ eine Überbeanspruchung des Fahrers anzeigt, die Beanspruchung des Fahrers reduziert wird, indem durch Steuerung wenigstens eines Fahrzeugsystems die Signalstärke und/oder Signalqualität von bereits erzeugten visuellen und/oder auditiven und/oder haptischen und/oder olfaktorischen Signalen reduziert bzw. verändert werden und/oder die Nutzung eines Fahrerassistenzsystems durch Ausgabe einer entsprechenden Information dem Fahrer angeboten wird, **dadurch gekennzeichnet daß**
c) falls der ermittelte Beanspruchungswert (WL) mit WL < WLₒₚₜ eine Unterbeanspruchung des Fahrers anzeigt, die Beanspruchung des Fahrers erhöht wird, indem durch Steuerung wenigstens eines Fahrzeugsystems visuelle und/oder auditive und/oder haptische und/oder olfaktorische Signale erzeugt und/oder bereits erzeugte visuelle und/oder auditive und/oder haptische und/oder olfaktorische Signale verstärkt und/oder deren Signalqualität verändert werden.

3. Verfahren zur Beeinflussung der Beanspruchung eines Fahrers während der Fahrt in einem Kraftfahrzeug, bei dem aus sensorisch erfassten physiologischen Daten des Fahrers ein Beanspruchungswert (Workload, WL) ermittelt wird, und
a) der ermittelte Beanspruchungswert (WL) mit einem vorgegebenen Beanspruchungszielwert (WLₒₚₜ) verglichen wird, und
b) falls der ermittelte Beanspruchungswert (WL) mit WL > WLₒₚₜ eine Überbeanspruchung des Fahrers anzeigt, die Beanspruchung des Fahrers reduziert wird, indem durch Steuerung wenigstens eines Fahrzeugsystems die Signalstärke und/oder Signalqualität eines bereits erzeugten visuellen und/oder auditiven und/oder haptischen und/oder olfaktorischen Signals reduziert bzw. verändert werden und/oder wenigstens ein Fahrerassistenzsystem aktiviert wird, **dadurch gekennzeichnet daß**
c) falls der ermittelte Beanspruchungswert (WL) mit WL < WLₒₚₜ eine Unterbeanspruchung des Fahrers anzeigt, die Beanspruchung des Fahrers erhöht wird, indem durch Steuerung wenigstens eines Fahrzeugsystems visuelle und/oder auditive und/oder haptische Signale erzeugt werden und/oder ein bereits erzeugte visuelle und/oder auditive und/oder haptische und/oder olfaktorische Signale verstärkt und/oder deren Signalqualität verändert werden.

4. Verfahren nach Anspruch 1, **dadurch gekennzeichnet, dass** bei anhaltender Überbeanspruchung des Fahrers, die Beanspruchung des Fahrers reduziert wird, indem durch Steuerung wenigstens eines Fahrzeugsystems die Signalstärke und/oder Signalqualität von bereits erzeugten visuellen und/oder auditiven und/oder haptischen und/oder olfaktorischen Signalen reduziert bzw. verändert werden und/oder die Nutzung eines Fahrerassistenzsystems mittels eines Fahrzeuginformationssystems dem Fahrer angeboten wird.

5. Verfahren nach Anspruch 1, **dadurch gekennzeichnet, dass** bei anhaltender Überbeanspruchung des Fahrers, die Beanspruchung des Fahrers reduziert wird, indem durch Steuerung wenigstens eines Fahrzeugsystems die Signalstärke und/oder Signalqualität eines bereits erzeugten visuellen und/oder auditiven und/oder haptischen und/oder olfaktorischen Signals reduziert bzw. verändert werden und/oder wenigstens ein Fahrerassistenzsystem aktiviert wird.

6. Verfahren nach Anspruch 2, **dadurch gekennzeichnet, dass** bei anhaltender Überbeanspruchung des Fahrers, die Beanspruchung des Fahrers reduziert wird, indem Fahrerinformations- und/oder Anzeigesysteme des Kraftfahrzeuges derart angesteuert werden, dass die Ausgabe visueller und/oder auditiver und/oder haptischer und/oder olfaktorischer Signale unterdrückt oder zu einem späteren Zeitpunkt ausgegeben werden.

7. Verfahren nach Anspruch 2 oder 6, **dadurch gekennzeichnet, dass** bei anhaltender Überbeanspruchung des Fahrers, die Beanspruchung des Fahrers reduziert wird, indem das angebotene Fahrerassistenzsystem aktiviert wird.

8. Verfahren nach Anspruch 3, **dadurch gekennzeichnet, dass** bei anhaltender Überbeanspruchung des Fahrers, die Beanspruchung des Fahrers reduziert wird, indem Fahrerinformations- und/oder Anzeigesysteme des Kraftfahrzeuges derart angesteuert werden, dass die Ausgabe visueller und/oder auditiver und/oder haptischer und/oder olfaktorischer Signale unterdrückt oder zu einem späteren Zeitpunkt ausgegeben werden.

9. Verfahren nach einem der vorangehenden Ansprüche, **dadurch gekennzeichnet, dass** das Fahrzeugsystem derart angesteuert wird, zur Anregung unterschiedlicher Sinneskanäle des Fahrers aufeinanderfolgend wenigstens zwei unterschiedlichen Sinneskanälen des Fahrers entsprechenden Signale erzeugt werden.

10. Verfahren nach einem der vorangehenden Ansprüche, **dadurch gekennzeichnet, dass** ein unterer Beanspruchungszielwert (WLᵤ) mit WLᵤ < WLₒₚₜ vorgegeben ist, und bei einem ermittelten Beanspruchungswert (WL) mit WL < WLᵤ die Beanspruchung des Fahrers erhöht wird.

11. Verfahren nach einem der vorangehenden Ansprüche, **dadurch gekennzeichnet, dass** ein oberer Beanspruchungszielwert (WLₒ) mit WLₒ > WLₒₚₜ vorgegeben ist, und bei einem ermittelten Beanspruchungswert (WL) mit WLₒ < WL die Erhöhung der Beanspruchung des Fahrers verhindert bzw. die Beanspruchung des Fahrers reduziert wird.

12. Verfahren nach einem der vorangehenden Ansprüche, **dadurch gekennzeichnet, dass** ein unterer minimaler Beanspruchungsgrenzwert (WLₘᵢₙ) mit WLₘᵢₙ < WLᵤ bzw. WLₘᵢₙ < WLₒₚₜ vorgegeben ist und ein akustisches und/oder optisches und/oder haptisches und/oder olfaktorisches Warnsignal erzeugt wird, wenn ein ermittelter Beanspruchungswert (WL) mit WL < WLₘᵢₙ die Gefahr des Einschlafens des Fahrers anzeigt.

13. Verfahren nach Anspruch 12, **dadurch gekennzeichnet, dass** andere Verkehrsteilnehmer durch akustische und visuelle Warnsignale gewarnt werden.

14. Verfahren nach einem der vorangehenden Ansprüche, **dadurch gekennzeichnet, dass** ein oberer maximaler Beanspruchungsgrenzwert (WLₘₐₓ) mit WLₒ < WLₘₐₓ bzw. WLₒₚₜ < WLₘₐₓ vorgegeben ist und andere Verkehrsteilnehmer durch akustische und visuelle Warnsignale gewarnt werden, wenn ein ermittelter Beanspruchungswert (WL) mit WLₘₐₓ < WL die Gefahr eines Zusammenbruchs des Fahrers anzeigt.

15. Verfahren nach einem der Ansprüche 14, **dadurch gekennzeichnet, dass** ein Automatikbremssystem des Fahrzeuges aktiviert wird.

16. Verfahren nach einem der Ansprüche 1, 4, und 5 bis 15, **dadurch gekennzeichnet, dass** eine Erhöhung der Beanspruchung des Fahrers verhindert wird, indem Warnmeldungen priorisiert und Fahrerinformationssysteme derart angesteuert werden, dass Warnmeldungen mit niedriger Priorisierung unterdrückt oder zu einem späteren Zeitpunkt ausgegeben werden.

17. Verfahren nach einem der Ansprüche 1, 4, und 5 bis 16, **dadurch gekennzeichnet, dass** eine Erhöhung der Beanspruchung des Fahrers verhindert wird, indem die Meldung des Einganges von Telefonanrufen, SMS-Nachrichten, E-Mails, Verkehrsmeldungen in das Fahrerinformationssystem unterdrückt oder zu einem späteren Zeitpunkt ausgegeben werden.

18. Verfahren nach einem der Ansprüche 1, 4, und 5 bis 17, **dadurch gekennzeichnet, dass** eine Erhöhung der Beanspruchung des Fahrers verhindert wird, indem eine Priorisierung der Anzeigen eines Anzeigesystems des Fahrzeuges durchgeführt wird und die Beleuchtung einer Anzeige mit niedriger Priorität ausgeschaltet oder deren Leuchtstärke reduziert wird.

19. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte für die Klimatisierung dienen.

20. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte für die Fahrzeugsitze dienen.

21. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte für ein Audiosystem im Fahrzeug dienen.

22. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte zur Einstellung der Beleuchtung für die Anzeigeinstrumente dienen.

23. Verfahren nach einem der vorangehenden Ansprüche, **dadurch gekennzeichnet, dass** als Fahrzeugsystem zur Erhöhung oder zur Reduzierung der Beanspruchung des Fahrers Türsteuergeräte dienen.

24. Verfahren nach einem der vorangehenden Ansprüche, **dadurch gekennzeichnet, dass** als Fahrzeugsystem zur Erhöhung oder der Reduzierung der Beanspruchung des Fahrers ein Navigationssystem dient.

25. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte für Informationssysteme dienen.

26. Verfahren nach einem der vorangehenden Ansprüche, **dadurch gekennzeichnet, dass** als Fahrzeugsystem zur Erhöhung oder zur Reduzierung der Beanspruchung des Fahrers ein Steuergerät für die Abstandsregelung (ACC) dient.

27. Verfahren nach einem der vorangehenden Ansprüche, **dadurch gekennzeichnet, dass** als Fahrzeugsystem zur Erhöhung oder zur Reduzierung der Beanspruchung des Fahrers ein Steuergerät für die Fahrwerksregelung dient.

28. Verfahren nach einem der vorangehenden Ansprüche, **dadurch gekennzeichnet, dass** als Fahrzeugsystem zur Erhöhung oder zur Reduzierung der Beanspruchung des Fahrers Steuergeräte für die Verkehrszeichenerkennung dienen.

29. Verfahren nach einem der vorangehenden Ansprüche, **dadurch gekennzeichnet, dass** als Fahrzeugsystem zur Erhöhung der Beanspruchung des Fahrers Steuergeräte für die Einstellung der Lenkradposition und zur Erzeugung von Lenkradvibrationen dienen.

30. Verfahren nach einem der vorangehenden Ansprüche, **dadurch gekennzeichnet, dass** als Fahrzeugsystem zur Erhöhung der Beanspruchung des Fahrers ein Steuergerät für die Servolenkung dient.

31. Verfahren nach einem der vorangehenden Ansprüche, **dadurch gekennzeichnet, dass** als Fahrzeugsystem zur Erhöhung der Beanspruchung des Fahrers Fahrerassistenzsysteme dienen, die bei aktivem Zustand abgeschaltet werden.

32. Verfahren nach einem der vorangehenden Ansprüche, **dadurch gekennzeichnet, dass** zur Ermittlung des Beanspruchungswertes des Fahrers zusätzlich dessen biographische Daten verwendet werden.

33. Verfahren nach einem der vorangehenden Ansprüche, **dadurch gekennzeichnet, dass** zur Ermittlung des Beanspruchungswertes des Fahrers zusätzlich Fahrzeugzustandsdaten sensorisch erfasst werden.

34. Verfahren nach einem der vorangehenden Ansprüche, **dadurch gekennzeichnet, dass** zur Ermittlung des Beanspruchungswertes des Fahrers zusätzlich dessen Fahrmanöver und/oder Fahreraktionen sensorisch erfasst werden

35. Verfahren nach einem der vorangehenden Ansprüche, **dadurch gekennzeichnet, dass** zur Ermittlung des Beanspruchungswertes des Fahrers zusätzlich Umgebungsdaten, wie Streckenart, Straßenzustand, Verkehr und Umwelt sensorisch erfasst werden.

36. Verfahren nach einem der vorangehenden Ansprüche, **dadurch gekennzeichnet, dass** bei einer Erhöhung der Beanspruchung des Fahrers der Fahrer durch Erzeugung eines Signals, insbesondere eines visuellen und/oder auditiven Signals hierüber informiert wird.

37. Vorrichtung zur Durchführung des Verfahrens nach einem der vorangehenden Ansprüche, **dadurch gekennzeichnet, dass** zur Erfassung der physiologischen Daten des Fahrers eine Sensoreinheit (31) vorgesehen ist, die über ein Bus-System mit einem Bordcomputer (10) zur Ermittlung und Auswertung des Beanspruchungswertes (WL) des Fahrers verbunden ist, und dass auf der Basis des von dem Bordcomputer (10) erzeugten Auswerteergebnisses (WL, WLⱼ) und den in einem Maßnahmenspeicher (15, 17) abgelegten Maßnahmen (O₁₁ ... Oₘₙ, u₁₁ ... uₘₙ) eine Workload-Steuereinheit (50) wenigstens ein Fahrzeugsystem (60, 70, 80, 90) entsprechend der dem Auswerteergebnis (WL, WLⱼ) zugeordneten Maßnahmen ansteuert.

38. Vorrichtung nach Anspruch 37, **dadurch gekennzeichnet, dass** eine Fahrzeugzustands- und Fahrzeugumgebungssensorik (20) mit dem Bordcomputer (10) in Verbindung steht.

39. Vorrichtung nach Anspruch 37 oder 38, **dadurch gekennzeichnet, dass** der Bordcomputer (10) mit einem Eingabegerät (32) zur Eingabe der biographischen Daten des Fahrers verbunden ist.

40. Vorrichtung nach einem der Ansprüche 35 bis 37, **dadurch gekennzeichnet, dass** eine Fahreraktivitätssensorik (40) vorgesehen ist, die mit dem Bordcomputer (10) in Verbindung steht.

## Claims

1. Method for influencing the workload upon a driver during travel in a motor vehicle, in which from sensorily detected physiological date of the driver a workload value (WL) is determined, and
a) the determined workload value (WL) is compared with a preset workload target value (WLₒₚₜ), and
b) where the determined workload value (WL) with WL > WLₒₚₜ indicates an overloading of the driver, an increase in the workload upon the driver is prevented in that driver information and/or display systems of the motor vehicle are controlled such that the issuing of visual and/or auditory and/or haptic and/or olfactory signals is fully or partially suppressed or is deferred to a later moment, **characterized in that**
c) where the determined workload value (WL) with WL < WLₒₚₜ indicates an underloading of the driver, the workload upon the driver is increased **in that**, through the controlling of at least one vehicle system, visual and/or auditory and/or haptic and/or olfactory signals are generated and/or already generated visual and/or auditory and/or haptic and/or olfactory signals are amplified and/or the signal quality thereof is altered.

2. Method for influencing the workload upon a driver during travel in a motor vehicle, in which from sensorily detected physiological date of the driver a workload value (WL) is determined, and
a) the determined workload value (WL) is compared with a preset workload target value (WLₒₚₜ), and
b) where the determined workload value (WL) with WL > WLₒₚₜ indicates an overloading of the driver, the workload upon the driver is reduced in that, through the controlling of at least one vehicle system, the signal strength and/or signal quality of already generated visual and/or auditory and/or haptic and/or olfactory signals is/are reduced or altered and/or the use of a driver assistance system is offered by the issuing of an appropriate information to the driver, **characterized in that**
c) where the determined workload value (WL) with WL < WLₒₚₜ indicates an underloading of the driver, the workload upon the driver is increased **in that**, through the controlling of at least one vehicle system, visual and/or auditory and/or haptic and/or olfactory signals are generated and/or already generated visual and/or auditory and/or haptic and/or olfactory signals are amplified and/or the signal quality thereof is altered.

3. Method for influencing the workload upon a driver during travel in a motor vehicle, in which from sensorily detected physiological date of the driver a workload value (WL) is determined, and
a) the determined workload value (WL) is compared with a preset workload target value (WLₒₚₜ), and
b) where the determined workload value (WL) with WL > WLₒₚₜ indicates an overloading of the driver, the workload upon the driver is reduced in that, through the controlling of at least one vehicle system, the signal strength and/or signal quality of an already generated visual and/or auditory and/or haptic and/or olfactory signal is/are reduced or altered and/or at least one driver assistance system is activated, **characterized in that**
c) where the determined workload value (WL) with WL < WLₒₚₜ indicates an underloading of the driver, the workload upon the driver is increased **in that**, through the controlling of at least one vehicle system, visual and/or auditory and/or haptic signals are generated and/or an already generated visual and/or auditory and/or haptic and/or olfactory signal is amplified and/or the signal quality thereof is altered.

4. Method according to Claim 1, **characterized in that**, in the event of sustained overloading of the driver, the workload upon the driver is reduced **in that**, through the controlling of at least one vehicle system, the signal strength and/or signal quality of already generated visual and/or auditory and/or haptic and/or olfactory signals is/are reduced or altered and/or the use of a driver assistance system is offered to the driver by means of a vehicle information system.

5. Method according to Claim 1, **characterized in that**, in the event of sustained overloading of the driver, the workload upon the driver is reduced **in that**, through the controlling of at least one vehicle system, the signal strength and/or signal quality of an already generated visual and/or auditory and/or haptic and/or olfactory signal is/are reduced or altered and/or at least one driver assistance system is activated.

6. Method according to Claim 2, **characterized in that**, in the event of sustained overloading of the driver, the workload upon the driver is reduced **in that** driver information and/or display systems of the motor vehicle are controlled such that the issuing of visual and/or auditory and/or haptic and/or olfactory signals is suppressed or is deferred to a later moment.

7. Method according to Claim 2 or 6, **characterized in that**, in the event of sustained overloading of the driver, the workload upon the driver is reduced **in that** the offered driver assistance system is activated.

8. Method according to Claim 3, **characterized in that**, in the event of sustained overloading of the driver, the workload upon the driver is reduced **in that** driver information and/or display systems of the motor vehicle are controlled such that the issuing of visual and/or auditory and/or haptic and/or olfactory signals is suppressed or is deferred to a later moment.

9. Method according to one of the preceding claims, **characterized in that** the vehicle system is controlled such that, for the stimulation of different sensory channels of the driver, signals corresponding to at least two different sensory channels of the driver are successively generated.

10. Method according to one of the preceding claims, **characterized in that** a lower workload target value (WLᵤ) with WLᵤ < WLₒₚₜ is preset, and if a workload value (WL) with WL < WLᵤ is determined, the workload upon the driver is increased.

11. Method according to one of the preceding claims, **characterized in that** an upper workload target value (WLₒ) with WLₒ > WLₒₚₜ is preset, and if a workload value (WL) with WLₒ < WL is determined, the increase in the workload upon the driver is prevented or the workload upon the driver is reduced.

12. Method according to one of the preceding claims, **characterized in that** a lower minimal workload limit value (WLₘᵢₙ) with WLₘᵢₙ < WLᵤ or WLₘᵢₙ < WLₒₚₜ is preset, and an acoustic and/or optical and/or haptic and/or olfactory warning signal is generated when a determined workload value (WL) with WL < WLₘᵢₙ indicates the danger of the driver falling asleep.

13. Method according to Claim 12, **characterized in that** other road users are warned by acoustic and visual warning signals.

14. Method according to one of the preceding claims, **characterized in that** an upper maximal workload limit value (WLₘₐₓ) with WLₒ < WLₘₐₓ or WLₒₚₜ < WLₘₐₓ is preset, and other road users are warned by acoustic and visual warning signals when a determined workload value (WL) with WLₘₐₓ < WL indicates the danger of a collapse of the driver.

15. Method according to Claim 14, **characterized in that** an automatic braking system of the vehicle is activated.

16. Method according to one of Claims 1, 4 and 5 to 15, **characterized in that** an increase in the workload upon the driver is prevented **in that** warning messages are prioritized and driver information systems are controlled such that low-priority warning messages are suppressed or are issued at a later moment.

17. Method according to one of Claims 1, 4 and 5 to 16, **characterized in that** an increase in the workload upon the driver is prevented **in that** the notice of the entry of telephone calls, text messages, e-mails, traffic reports into the driver information system is suppressed or is issued at a later moment.

18. Method according to one of Claims 1, 4 and 5 to 17, **characterized in that** an increase in the workload upon the driver is prevented **in that** a prioritization of the displays of a display system of the vehicle is realized and the illumination of a low-priority display is switched off or the light intensity thereof is reduced.

19. Method according to one of the preceding claims, **characterized in that** control units for the air-conditioning serve as a vehicle system for increasing or reducing the workload upon the driver.

20. Method according to one of the preceding claims, **characterized in that** control units for the vehicle seats serve as a vehicle system for increasing or reducing the workload upon the driver.

21. Method according to one of the preceding claims, **characterized in that** control units for an audio system in the vehicle serve as a vehicle system for increasing or reducing the workload upon the driver.

22. Method according to one of the preceding claims, **characterized in that** control units for adjusting the illumination for the display instruments serve as a vehicle system for increasing or reducing the workload upon the driver.

23. Method according to one of the preceding claims, **characterized in that** door control units serve as a vehicle system for increasing or reducing the workload upon the driver.

24. Method according to one of the preceding claims, **characterized in that** a navigation system serves as a vehicle system for increasing or reducing the workload upon the driver.

25. Method according to one of the preceding claims, **characterized in that** control units for information systems serve as a vehicle system for increasing or reducing the workload upon the driver.

26. Method according to one of the preceding claims, **characterized in that** a control unit for the inter-vehicle distance control system (ACC) serves as a vehicle system for increasing or reducing the workload upon the driver.

27. Method according to one of the preceding claims, **characterized in that** a control unit for the chassis control system serves as a vehicle system for increasing or reducing the workload upon the driver.

28. Method according to one of the preceding claims, **characterized in that** control units for road sign recognition serve as a vehicle system for increasing or reducing the workload upon the driver.

29. Method according to one of the preceding claims, **characterized in that** control units for adjusting the steering wheel position and for generating steering wheel vibrations serve as a vehicle system for increasing the workload upon the driver.

30. Method according to one of the preceding claims, **characterized in that** a control unit for the power steering serves as a vehicle system for increasing the workload upon the driver.

31. Method according to one of the preceding claims, **characterized in that** vehicle assistance systems, which in the active state are disconnected, serve as a vehicle system for increasing the workload upon the driver.

32. Method according to one of the preceding claims, **characterized in that**, for determining the workload upon the driver, his biographical data are additionally used.

33. Method according to one of the preceding claims, **characterized in that**, for determining the workload upon the driver, vehicle status data are additionally sensorily detected.

34. Method according to one of the preceding claims, **characterized in that**, for determining the workload upon the driver, his driving manoeuvres and/or driver actions are additionally sensorily detected.

35. Method according to one of the preceding claims, **characterized in that**, for determining the workload upon the driver, surroundings data, such as route type, road condition, traffic and environment, are additionally sensorily detected.

36. Method according to one of the preceding claims, **characterized in that**, when the workload upon the driver is increased, the driver is informed of this by the generation of a signal, in particular a visual and/or auditory signal.

37. Apparatus for implementing the method according to one of the preceding claims, **characterized in that**, for detecting the physiological data of the driver, a sensor unit (31) is provided, which is connected by a bus system to an on-board computer (10) for determining and evaluating the workload value (WL) upon the driver, and **in that**, on the basis of the evaluation finding (WL, WLⱼ) generated by the on-board computer (10) and the measures (O₁₁, ... Oₘₙ, U₁₁ ... uₘₙ) stored in a measure memory (15, 17), a workload control unit (50) controls at least one vehicle system (60, 70, 80, 90) in accordance with the measures assigned to the evaluation finding (WL, WLⱼ).

38. Apparatus according to Claim 37, **characterized in that** a vehicle status and vehicle surroundings sensor system (20) is connected to the on-board computer (10).

39. Apparatus according to Claim 37 or 38, **characterized in that** the on-board computer (10) is connected to an input unit (32) for inputting the biographical data of the driver.

40. Apparatus according to one of Claims 35 to 37, **characterized in that** a driver activity sensor system (40) is provided, which is connected to the on-board computer (10).

## Revendications

1. Procédé pour influencer la sollicitation d'un conducteur pendant la conduite dans un véhicule automobile, avec lequel un indice de sollicitation (charge de travail, WL) est déterminé à partir de données physiologiques du conducteur acquises par détection et
a) l'indice de sollicitation déterminé (WL) est comparé avec un indice de sollicitation voulu (WLₒₚₜ) prédéfini et
b) si l'indice de sollicitation déterminé (WL) indique avec WL > WLₒₚₜ une sollicitation excessive du conducteur, une augmentation de la sollicitation du conducteur est évitée en ce que les systèmes d'information du conducteur et/ou d'affichage du véhicule automobile sont commandés de telle sorte que la diffusion de signaux visuels et/ou sonores et/ou haptiques et/ou olfactifs est totalement ou partiellement inhibée ou remise à un moment ultérieur,
**caractérisé en ce que**
c) si l'indice de sollicitation déterminé (WL) indique avec WL < WLₒₚₜ une sous-sollicitation du conducteur, la sollicitation du conducteur est augmentée en commandant au moins un système du véhicule de manière à ce qu'il génère des signaux visuels et/ou sonores et/ou haptiques et/ou olfactifs et/ou amplifie les signaux visuels et/ou sonores et/ou haptiques et/ou olfactifs déjà générés et/ou modifie la qualité de ces signaux.

2. Procédé pour influencer la sollicitation d'un conducteur pendant la conduite dans un véhicule automobile, avec lequel un indice de sollicitation (charge de travail, WL) est déterminé à partir de données physiologiques du conducteur acquises par détection et
a) l'indice de sollicitation déterminé (WL) est comparé avec un indice de sollicitation voulu (WLₒₚₜ) prédéfini et
b) si l'indice de sollicitation déterminé (WL) indique avec WL > WLₒₚₜ une sollicitation excessive du conducteur, la sollicitation du conducteur est réduite en ce qu'en commandant au moins un système du véhicule, l'intensité du signal et/ou la qualité du signal des signaux visuels et/ou sonores et/ou haptiques et/ou olfactifs déjà générés est réduite ou modifiée et/ou l'utilisation d'un système d'assistance au conducteur est proposée en diffusant une information correspondante à l'attention du conducteur,
**caractérisé en ce que**
c) si l'indice de sollicitation déterminé (WL) indique avec WL < WLₒₚₜ une sous-sollicitation du conducteur, la sollicitation du conducteur est augmentée en commandant au moins un système du véhicule de manière à ce qu'il génère des signaux visuels et/ou sonores et/ou haptiques et/ou olfactifs et/ou amplifie les signaux visuels et/ou sonores et/ou haptiques et/ou olfactifs déjà générés et/ou modifie la qualité de ces signaux.

3. Procédé pour influencer la sollicitation d'un conducteur pendant la conduite dans un véhicule automobile, avec lequel un indice de sollicitation (charge de travail, WL) est déterminé à partir de données physiologiques du conducteur acquises par détection et
a) l'indice de sollicitation déterminé (WL) est comparé avec un indice de sollicitation voulu (WLₒₚₜ) prédéfini et
b) si l'indice de sollicitation déterminé (WL) indique avec WL > WLₒₚₜ une sollicitation excessive du conducteur, la sollicitation du conducteur est réduite en ce qu'en commandant au moins un système du véhicule, l'intensité du signal et/ou la qualité du signal d'un signal visuel et/ou sonore et/ou haptique et/ou olfactif déjà généré est réduite ou modifiée et/ou au moins un système d'assistance à la conduite est activé,
**caractérisé en ce que**
c) si l'indice de sollicitation déterminé (WL) indique avec WL < WLₒₚₜ une sous-sollicitation du conducteur, la sollicitation du conducteur est augmentée en commandant au moins un système du véhicule de manière à ce qu'il génère des signaux visuels et/ou sonores et/ou haptiques et/ou amplifie les signaux visuels et/ou sonores et/ou haptiques et/ou olfactifs déjà générés et/ou modifie la qualité de ces signaux.

4. Procédé selon la revendication 1, **caractérisé en ce qu'**en cas de sollicitation excessive persistante du conducteur, la sollicitation du conducteur est réduite **en ce qu'**en commandant au moins un système du véhicule, l'intensité du signal et/ou la qualité du signal des signaux visuels et/ou sonores et/ou haptiques et/ou olfactifs déjà générés est réduite ou modifiée et/ou l'utilisation d'un système d'assistance au conducteur est proposée au conducteur au moyen d'un système d'information du véhicule.

5. Procédé selon la revendication 1, **caractérisé en ce qu'**en cas de sollicitation excessive persistante du conducteur, la sollicitation du conducteur est réduite **en ce qu'**en commandant au moins un système du véhicule, l'intensité du signal et/ou la qualité du signal d'un signal visuel et/ou sonore et/ou haptique et/ou olfactif déjà généré est réduite ou modifiée et/ou au moins un système d'assistance à la conduite est activé.

6. Procédé selon la revendication 2, **caractérisé en ce qu'**en cas de sollicitation excessive persistante du conducteur, la sollicitation du conducteur est réduite **en ce que** les systèmes d'information du conducteur et/ou d'affichage du véhicule automobile sont commandés de telle sorte que la diffusion de signaux visuels et/ou sonores et/ou haptiques et/ou olfactifs est inhibée ou remise à un moment ultérieur.

7. Procédé selon la revendication 2 ou 6, **caractérisé en ce qu'**en cas de sollicitation excessive persistante du conducteur, la sollicitation du conducteur est réduite en activant le système d'assistance au conducteur proposé.

8. Procédé selon la revendication 3, **caractérisé en ce qu'**en cas de sollicitation excessive persistante du conducteur, la sollicitation du conducteur est réduite **en ce que** les systèmes d'information du conducteur et/ou d'affichage du véhicule automobile sont commandés de telle sorte que la diffusion de signaux visuels et/ou sonores et/ou haptiques et/ou olfactifs est inhibée ou remise à un moment ultérieur.

9. Procédé selon l'une des revendications précédentes, **caractérisé en ce que** le système du véhicule est commandé de telle sorte qu'au moins deux signaux correspondant à des canaux sensoriels différents du conducteur sont générés successivement pour exciter des canaux sensoriels différents du conducteur.

10. Procédé selon l'une des revendications précédentes, **caractérisé en ce qu'**un indice de sollicitation voulu inférieur (WLᵤ) est prédéfini avec WLᵤ < WLₒₚₜ et la sollicitation du conducteur est augmentée si l'indice de sollicitation déterminé (WL) est inférieur à WLᵤ.

11. Procédé selon l'une des revendications précédentes, **caractérisé en ce qu'**un indice de sollicitation voulu supérieur (WLₒ) est prédéfini avec WLₒ > WLₒₚₜ et une augmentation de la sollicitation du conducteur est empêchée ou la sollicitation du conducteur est réduite si l'indice de sollicitation déterminé (WL) est supérieur à WLₒ.

12. Procédé selon l'une des revendications précédentes, **caractérisé en ce qu'**un indice de sollicitation inférieur minimum (WLₘᵢₙ) est prédéfini avec WLₘᵢₙ < WLᵤ ou WLₘᵢₙ < WLₒₚₜ et un signal d'alerte visuel et/ou sonore et/ou haptique et/ou olfactif est généré si l'indice de sollicitation déterminé (WL) indique avec WL < WLₘᵢₙ un risque d'endormissement du conducteur.

13. Procédé selon la revendication 12, **caractérisé en ce que** les autres acteurs du trafic sont avertis par des signaux d'alerte sonores et visuels.

14. Procédé selon l'une des revendications précédentes, **caractérisé en ce qu'**un indice de sollicitation supérieur maximum (WLₘₐₓ) est prédéfini avec WLₒ < WLₘₐₓ ou WLₒₚₜ < WLₘₐₓ et les autres acteurs du trafic sont avertis par des signaux d'alerte sonores et visuels si l'indice de sollicitation déterminé (WL) indique avec WLₘₐₓ < WL un risque de dépression du conducteur.

15. Procédé selon la revendication 14, **caractérisé en ce qu'**un système de freinage automatique du véhicule est activé.

16. Procédé selon l'une des revendications 1, 4 et 5 à 15, **caractérisé en ce qu'**une augmentation de la sollicitation du conducteur est empêchée **en ce qu'**une priorité est attribuée aux messages d'alerte et les systèmes d'information du conducteur sont commandés de telle sorte que les messages d'alerte de faible priorité sont inhibés ou délivrés à un moment ultérieur.

17. Procédé selon l'une des revendications 1, 4 et 5 à 16, **caractérisé en ce qu'**une augmentation de la sollicitation du conducteur est empêchée **en ce que** le message d'arrivée d'appels téléphoniques, de messages SMS, de courriels, de messages de trafic est inhibé dans le système d'information du conducteur ou délivré à un moment ultérieur.

18. Procédé selon l'une des revendications 1, 4 et 5 à 17, **caractérisé en ce qu'**une augmentation de la sollicitation du conducteur est empêchée **en ce qu'**une priorité est attribuée aux indications d'un système d'affichage du véhicule et l'éclairage d'un indicateur de faible priorité est désactivé ou son intensité lumineuse est réduite.

19. Procédé selon l'une des revendications précédentes, **caractérisé en ce que** les appareils de commande de la climatisation servent de système du véhicule utilisé pour augmenter ou réduire la sollicitation du conducteur.

20. Procédé selon l'une des revendications précédentes, **caractérisé en ce que** les appareils de commande des sièges du véhicule servent de système du véhicule utilisé pour augmenter ou réduire la sollicitation du conducteur.

21. Procédé selon l'une des revendications précédentes, **caractérisé en ce que** les appareils de commande d'un système audio dans le véhicule servent de système du véhicule utilisé pour augmenter ou réduire la sollicitation du conducteur.

22. Procédé selon l'une des revendications précédentes, **caractérisé en ce que** les appareils de commande destiné à régler l'éclairage des instruments indicateurs servent de système du véhicule utilisé pour augmenter ou réduire la sollicitation du conducteur.

23. Procédé selon l'une des revendications précédentes, **caractérisé en ce que** les appareils de commande des portières servent de système du véhicule utilisé pour augmenter ou réduire la sollicitation du conducteur.

24. Procédé selon l'une des revendications précédentes, **caractérisé en ce qu'**un système de navigation sert de système du véhicule utilisé pour augmenter ou réduire la sollicitation du conducteur.

25. Procédé selon l'une des revendications précédentes, **caractérisé en ce que** les appareils de commande des systèmes d'information servent de système du véhicule utilisé pour augmenter ou réduire la sollicitation du conducteur.

26. Procédé selon l'une des revendications précédentes, **caractérisé en ce qu'**un appareil de commande de la régulation de distance (ACC) sert de système du véhicule utilisé pour augmenter ou réduire la sollicitation du conducteur.

27. Procédé selon l'une des revendications précédentes, **caractérisé en ce qu'**un appareil de commande de la régulation du train roulant sert de système du véhicule utilisé pour augmenter ou réduire la sollicitation du conducteur.

28. Procédé selon l'une des revendications précédentes, **caractérisé en ce que** les appareils de commande de la détection des signaux de circulation servent de système du véhicule utilisé pour augmenter ou réduire la sollicitation du conducteur.

29. Procédé selon l'une des revendications précédentes, **caractérisé en ce que** les appareils de commande destinés à régler la position du volant et à générer des vibrations du volant servent de système du véhicule utilisé pour augmenter la sollicitation du conducteur.

30. Procédé selon l'une des revendications précédentes, **caractérisé en ce qu'**un appareil de commande de la direction assistée sert de système du véhicule utilisé pour augmenter la sollicitation du conducteur.

31. Procédé selon l'une des revendications précédentes, **caractérisé en ce que** des systèmes d'assistance au conducteur qui sont mis hors service à l'état actif servent de système du véhicule utilisé pour augmenter la sollicitation du conducteur.

32. Procédé selon l'une des revendications précédentes, **caractérisé en ce que** des données biographiques du conducteur sont utilisées en plus pour déterminer son indice de sollicitation.

33. Procédé selon l'une des revendications précédentes, **caractérisé en ce que** des données d'état du véhicule sont en plus acquises par détection pour déterminer l'indice de sollicitation du conducteur.

34. Procédé selon l'une des revendications précédentes, **caractérisé en ce que** la manoeuvre de conduite du conducteur et/ou les actions du conducteur sont en plus acquises par détection pour déterminer l'indice de sollicitation du conducteur.

35. Procédé selon l'une des revendications précédentes, **caractérisé en ce que** des données d'environnement telles que le type de trajet, l'état de la route, le trafic et l'environnement sont en plus acquises par détection pour déterminer l'indice de sollicitation du conducteur.

36. Procédé selon l'une des revendications précédentes, **caractérisé en ce qu'**en cas d'augmentation de la sollicitation du conducteur, le conducteur en est informé par un signal, notamment un signal visuel et/ou sonore généré.

37. Dispositif pour mettre en oeuvre le procédé selon l'une des revendications précédentes, **caractérisé en ce qu'**une unité de détection (31) est prévue pour acquérir les données physiologiques du conducteur, laquelle est reliée avec un ordinateur de bord (10) par le biais d'un système de bus pour déterminer et interpréter l'indice de sollicitation (WL) du conducteur, et qu'une unité de commande de charge de travail (50), sur la base du résultat de l'interprétation (WL, WLⱼ) produit par l'ordinateur de bord (10) et des mesures (o₁₁ ... oₘₙ, u₁₁ ... Uₘₙ) enregistrées dans une mémoire de mesures (15, 17), commande au moins un système du véhicule (60, 70, 80, 90) conformément aux mesures associées au résultat de l'interprétation (WL, WLⱼ).

38. Dispositif selon la revendication 37, **caractérisé en ce qu'**un dispositif de détection de l'état du véhicule et de l'environnement du véhicule (20) est relié avec l'ordinateur de bord (10).

39. Dispositif selon la revendication 37 ou 38, **caractérisé en ce que** l'ordinateur de bord (10) est relié avec un appareil d'entrée (32) pour l'entrée des données biographiques du conducteur.

40. Dispositif selon l'une des revendications 35 à 37, **caractérisé en ce qu'**il est prévu un dispositif de détection de l'activité du conducteur (40) qui est relié avec l'ordinateur de bord (10).
